# EUROPÄISCHE PATENTSCHRIFT

(11) **EP 1 343 312 B1**
(45) Veröffentlichungstag und Bekanntmachung des Hinweises auf die Patenterteilung: **26.04.2006**
(21) Anmeldenummer: 03003436.7
(22) Anmeldetag: 14.02.2003
(51) Int. Cl.: H04N 5/232, H04N 5/235

(54) **Digitale Laufbildkamera**
Digital motion picture camera
Caméra cinématographique numérique

(30) Priorität: 08.03.2002 DE 10210327
(43) Veröffentlichungstag der Anmeldung: 10.09.2003
(73) Patentinhaber: ARNOLD & RICHTER CINE TECHNIK GMBH & CO. BETRIEBS KG, 80799 München (DE)
(72) Erfinder: Kandleinsberger, Robert, 80809 München (DE); Khanh, Tran Quoc, Dr., 80636 München (DE); Koppetz, Michael, 81669 München (DE); Popp, Hermann, 81547 München (DE)
(74) Vertreter: Manitz, Finsterwald & Partner GbR

(56) Entgegenhaltungen:
- EP-A- 0 377 914
- EP-A- 1 111 443
- EP-A- 1 168 833
- WO-A-00/38415
- WO-A-00/51345
- GB-A- 2 166 317
- US-A- 5 196 938
- US-A- 5 218 441
- US-A- 5 654 537

## Beschreibung

Die Erfindung betrifft eine Laufbildkamera für Bewegtbildaufnahmen mit hoher Bildqualität, wie beispielsweise Fernsehspielfilme, Kinowerbung, Kinofilme oder auch industrielle oder medizinische Anwendungen. Für derartige Aufnahmen sind Laufbildkameras zur Belichtung eines fotochemischen Negativfilms bekannt. Diese Aufnahmetechnik ermöglicht eine hohe Auflösung, eine große Helligkeitsdynamik und eine gute Farbwiedergabe. Allerdings sind das Entwickeln und das Umkopieren eines solchen Negativfilms unerwünscht aufwändig, da spezialisierte Anlagen benötigt werden. Ferner ist es für eine inzwischen übliche elektronische Bildbearbeitung - beispielsweise zur Änderung der Farbe oder zum Einfügen synthetischer Bildelemente - erforderlich, das belichtete Filmmaterial nachträglich zu digitalisieren.

Es sind auch digitale Videokameras bekannt, die die Aufnahmebilder mit drei für verschiedene Farben vorgesehenen CCD-Sensoren aufnehmen und in einem digitalen Format auf Magnetband abspeichern. Derartige Kameras haben also den Vorteil, dass die aufgenommenen Filmbilder bereits in digitaler Form vorliegen. Solche Videokameras erfüllen jedoch nicht die bei allen typischen Aufnahmesituationen auftretenden Anforderungen und werden demzufolge bei Bewegtbildaufnahmen, bei denen eine besonders hohe Bildqualität erwünscht ist, nicht eingesetzt. Beispielsweise setzt ein derartiger Kameraaufbau mit drei CCD-Sensoren Aufnahmeobjektive mit einer vergleichsweise langen hinteren Brennweite voraus, was für die Abbildungsleistungen der Optiken nachteilig ist. Ferner sind Teilerprismen im Empfangsstrahlengang erforderlich, die ebenfalls zu einer unerwünschten Verringerung der Aufnahmequalität führen können.

Aus der US 5,218,441 ist eine Laufbildkamera mit den Merkmalen des Oberbegriffs des Anspruchs 1 bekannt.

Aus der US5,196,938 ist eine Bildaufzeichnungsvorrichtung bekannt, bei der die Belichtungszeit und die Bildaufnahmefrequenz auswählbar sind.

Es ist eine Aufgabe der Erfindung, eine Laufbildkamera zu schaffen, die zum einen eine digitale Aufnahme von Laufbildern ermöglicht und die zum anderen für den Einsatz für Bewegtbildaufnahmen mit hoher Bildqualität, wie beispielsweise Fernsehspielfilme, Kinowerbung oder Kinofilme, geeignet ist.

Diese Aufgabe wird durch eine digitale Laufbildkamera mit den Merkmalen des Anspruchs 1 gelöst.

Bei der erfindungsgemäßen Laufbildkamera ist also eine Sensoreinrichtung mit mehreren fotoelektrischen Sensorelementen vorgesehen, die jeweils ein elektrisches Empfangssignal erzeugen. Diese Empfangssignale werden, gegebenenfalls nach einer Verstärkung, noch innerhalb der Kamera digitalisiert, so dass die Bildinformationen unmittelbar in einem digitalen Format vorliegen und somit ohne weiteres elektronisch bearbeitet sowie ohne wesentlichen Qualitätsverlust vervielfältigt werden können.

Ein besonderer Vorteil der erfindungsgemäßen digitalen Laufbildkamera liegt darin, dass die Frequenz, mit der die aufeinander folgenden Laufbilder aufgenommen werden, variiert werden kann, und zwar in einer vom Anwender vorgebbaren Weise. Dadurch können die Bilder mit einer anderen Frequenz aufgenommen werden, als sie letztlich als Laufbildfilm wiedergegeben werden sollen. Diese Veränderlichkeit der Bildaufnahmefrequenz ermöglicht Zeitrafferaufnahmen, die beispielsweise für Action-Szenen oder bei extrem langsam ablaufenden Vorgängen erwünscht sind, um einen Handlungsvorgang schneller erscheinen zu lassen als er während der Aufnahme tatsächlich abläuft. Ferner gestattet die Veränderlichkeit der Bildaufnahmefrequenz Zeitlupenaufnahmen, wie sie für viele Bewegtbildaufnahmen ebenfalls gängig und erwünscht sind.

Wichtig für die Erfindung ist, dass diese Vorteile durch Änderung der Frequenz, mit der die aufeinander folgenden Laufbilder aufgenommen werden, erreicht werden, und dass die erwünschten Zeitraffer- oder Zeitlupeneffekte demnach nicht durch nachträgliche zeitliche Interpolation einzelner Laufbilder erzeugt werden. Dadurch werden Interpolationsartefakte vermieden, die bei Interpolation von Laufbildern auftreten können, die mit einer konstanten Frequenz aufgenommen worden sind, wie dies beispielsweise bei den eingangs genannten CCD-Sensoren der Fall ist.

Dagegen ist es für die Verwirklichung der Erfindung unerheblich, ob die Laufbilder als Vollbilder oder als Halbbilder aufgenommen werden.

Bei der erfindungsgemäßen Laufbildkamera ist also die Möglichkeit einer Abweichung der aktuellen Bildaufnahmefrequenz von einem Grundwert von beispielsweise 24 Bildern pro Sekunde (frames per second, fps) vorgesehen. Dies bedeutet, dass die einzelnen aufgenommenen Laufbilder eine zunehmende Phasenverschiebung bezüglich dieses Grundwerts der Bildaufnahmefrequenz besitzen.

Als ein weiteres vorteilhaftes Merkmal der erfindungsgemäßen digitalen Laufbildkamera ist ein optischer Sucher vorgesehen, der eine optische Beobachtung der aufzunehmenden Laufbilder ermöglicht, und es ist wenigstens eine Strahlenumlenkeinrichtung vor der Sensoreinrichtung angeordnet, um den beispielsweise durch eine Aufnahmeoptik vorgegebenen Empfangsstrahlengang zum einen in einen Aufnahmestrahlengang für die Sensoreinrichtung und zum anderen in einen Sucherstrahlengang für den optischen Sucher aufzuteilen.

Dadurch wird also der Vorteil der Gewinnung digitalisierter Empfangssignale mittels der erläuterten Sensoreinrichtung kombiniert mit dem Vorteil der Verwendung eines optischen Suchers, der eine direkte Beobachtung der aufzunehmenden Filmszene ermöglicht. Im Gegensatz zu herkömmlichen digitalen Videokameras, die mit einem elektronischen Sucher in Form eines Anzeigemonitors zur Wiedergabe der aufgenommenen Laufbilder ausgestattet sind, kann durch Verwendung eines optischen Suchers eine Verfälschung der Beobachtung der Filmszene gegenüber der tatsächlich aufgenommenen Filmszene besser vermieden werden.

Eine derartige Verfälschung kann nämlich beispielsweise aus einer zwangsläufig geringen Auflösung eines Anzeigemonitors oder aus einer Farbwiedergabe eines derartigen Anzeigemonitors resultieren, die nicht mit der Farbempfindlichkeit der eigentlichen Sensoreinrichtung der Laufbildkamera übereinstimmt. Diese Gefahren werden bei der erfindungsgemäßen Laufbildkamera vermieden, da der Anwender die aufzunehmende Filmszene direkt, das heißt durch die Aufnahmeoptik der Kamera hindurch beobachten kann.

Ein weiterer Vorteil der Kombination einer Strahlenumlenkeinrichtung mit einem optischen Sucher besteht darin, dass durch den Sucher ein Bildausschnitt beobachtet werden kann, der größer ist als der mittels der Sensoreinrichtung tatsächlich aufgenommene Bildausschnitt. Somit kann der Kameramann Gegenstände erkennen, die sich dem tatsächlich aufgenommenen Bildausschnitt nähern und jedoch nicht mit aufgenommen werden sollen. Dadurch kann beispielsweise eine unbeabsichtigte Aufzeichnung eines Mikrofons am Rand des Bildausschnitts rechtzeitig erkannt und verhindert werden.

Die genannte Variierung der Bildaufnahmefrequenz kann bei der erfindungsgemäßen Laufbildkamera beispielsweise dadurch verwirklicht werden, dass der Anfangszeitpunkt der Belichtung der Sensorelemente, also der Anfangszeitpunkt der Lichtbeaufschlagung oder der Zeitpunkt des tatsächlichen Beginns der Empfangssignalerzeugung aufgrund einer Lichtbeaufschlagung, durch entsprechende Ansteuerung zu unterschiedlichen Zeitpunkten oder Phasenlagen erfolgt. Insbesondere kann das Rücksetzen oder Löschen eines fotoelektrischen Sensorelements zu einem durch die Steuereinrichtung vorgebbaren Zeitpunkt erfolgen.

Alternativ oder zusätzlich kann die Bildaufnahmefrequenz dadurch variiert werden, dass die Steuereinrichtung das Ende der Belichtung eines fotoelektrischen Sensorelements zu unterschiedlichen Zeitpunkten veranlasst. Diese Maßnahme führt insbesondere dann zu unterschiedlichen Bildaufnahmefrequenzen, wenn der Beginn der Belichtung eines nachfolgenden Laufbilds nicht gemäß einem festen Zeitraster erfolgt, sondern in zeitlichem Bezug lediglich zu dem (variierbaren) Endzeitpunkt der vorherigen Belichtung.

In beiden Fällen oder durch Kombination dieser beiden Steuerungsmaßnahmen wird also eine Phasenverschiebung der Bildaufnahme bezüglich eines Grundwerts der Bildaufnahmefrequenz erreicht, wobei gleichzeitig eine Variierung der Dauer der Belichtungszeit möglich ist.

Die erwünschte Variierung der Bildaufnahmefrequenz kann auch dadurch verwirklicht werden, dass die Rate oder Frequenz variiert wird, mit der die Empfangssignale der einzelnen Sensorelemente nacheinander rückgesetzt oder ausgelesen werden. Mit anderen Worten kann ein sequentielles Auslesen der Empfangssignale der Sensorelemente gemäß einem Auslesetakt vorgesehen sein, wobei durch das sequentielle Auslesen aller Empfangssignale letztlich ein einziges Bild aufgenommen wird. Durch Variierung dieses Auslesetakts kann von einem festen Zeitraster und somit von einem bestimmten Grundwert der Bildaufnahmefrequenz abgewichen werden.

Was die Reihenfolge des Auslesens der fotoelektrischen Sensorelemente betrifft, ist es möglich, dass die Steuereinrichtung zunächst nacheinander ein Rücksetzen oder Löschen aller Sensorelemente veranlasst und anschließend die Empfangssignale der Sensorelemente nacheinander ausliest, also an eine Verstärkungseinrichtung und/oder an die Digitalisierungseinrichtung weiterleitet. In einem derartigen Fall ist die vorerwähnte Variierung des Anfangszeitpunkts und/oder des Endzeitpunkts der Belichtung besonders geeignet, um die erwünschte Variierung der Bildaufnahmefrequenz zu verwirklichen.

Alternativ zu diesem sequentiellen Auslesen der Sensorelemente kann auch vorgesehen sein, die Empfangssignale der fotoelektrischen Sensorelemente parallel oder zumindest gruppenweise parallel - beispielsweise unterteilt nach unterschiedlichen Flächenbereichen der Sensoreinrichtung - auszulesen. Dies vereinfacht die Verwirklichung besonders hoher Bildaufnahmefrequenzen. Die Bildaufnahmefrequenz kann hierbei variiert werden, indem die Sensorelemente bzw. eine Gruppe von Sensorelementen gemeinsam zu variablen Zeitpunkten rückgesetzt und/oder zu variablen Zeitpunkten ausgelesen werden.

Vorzugsweise sind die Sensoreinrichtung und die Steuereinrichtung für eine stufenlose Variierbarkeit der Bildaufnahmefrequenz ausgebildet, beispielsweise durch stufenlose Variierbarkeit des Auslesetakts der Sensorelemente. Alternativ hierzu kann eine Veränderlichkeit der Bildaufnahmefrequenz in vorbestimmten Frequenzschritten vorgesehen sein, beispielsweise indem die Bildaufnahmefrequenz in Einheiten des Auslesetakts geändert wird, mit dem die fotoelektrischen Sensorelemente sequentiell ausgelesen werden. Zum Beispiel kann nach einem sequentiellen oder simultanen Auslesen aller Sensorelemente für die Dauer eines vorgebbaren, stufenlos oder diskret variablen Warteeintervalls abgewartet werden, bis erneut mit dem sequentiellen Auslesen oder gegebenenfalls dem hierzu erforderlichen Rücksetzen der Sensorelemente begonnen wird.

Jedem Sensorelement der Sensoreinrichtung kann eine eigene Verstärkungseinrichtung zur Verstärkung des jeweiligen Empfangssignals und/oder eine eigene Digitalisierungseinrichtung zugeordnet sein. In diesem Fall ist es bevorzugt, wenn die Verstärkungseinrichtung oder die Digitalisierungseinrichtung bereits in die Sensoreinrichtung bzw. den entsprechenden Halbleiterbaustein integriert ist. Beispielsweise können in einem dreidimensionalen Aufbau der Sensoreinrichtung an der Rückseite einer die Sensorelemente enthaltenden fotoelektrischen Fläche Verstärker und/ oder Analog/ Digital-Wandler integriert sein.

Alternativ hierzu ist es auch möglich, für mehrere oder alle Sensorelemente gemeinsam eine einzige Verstärkungseinrichtung oder zumindest eine einzige Digitalisierungseinrichtung vorzusehen.

Eine besonders einfache Verwirklichung der Erfindung ist durch Ausbildung der Sensoreinrichtung in CMOS-Bauweise möglich. Ein derartiger CMOS-Sensor ermöglicht die erläuterte Variierung der Bildaufnahmefrequenz, und er gestattet ein Auslesen der Sensorelemente mit einem - beispielsweise bezüglich eines CCD-Sensors - vergleichsweise hohen Auslesetakt und somit mit einer hohen Bildaufnahmefrequenz. Dadurch kann die Bildaufnahmefrequenz letztlich innerhalb eines vorteilhaft großen Frequenzbereichs variiert werden.

Der genannte optische Sucher der erfindungsgemäßen Laufbildkamera kann zur Erzeugung eines realen Bilds ausgebildet sein, das beispielsweise auf eine Mattscheibe abgebildet wird und dort aufgrund der Mattierung der Scheibe beobachtet werden kann. Alternativ hierzu kann die Erzeugung eines virtuellen Bildes vorgesehen sein, das mittels einer zugeordneten Sucheroptik beobachtet werden kann. In beiden Fällen kann innerhalb der Bildebene eine Kennzeichnung zur Markierung des tatsächlich aufgenommenen Bildausschnitts vorgesehen sein, wie vorstehend erläutert. Ferner ist es von Vorteil, wenn der optische Sucher, die genannte Mattscheibe oder die genannte Sucheroptik als austauschbare Modulbausteine vorgesehen sind, die gleichzeitig für andere Kameratypen verwendet werden können.

Für die genannte Strahlenumlenkeinrichtung ist eine drehbewegliche Spiegelblende vorgesehen, die wenigstens einen verspiegelten Ablenkbereich und wenigstens eine Durchlassöffnung aufweist, die beispielsweise jeweils kreissektorförmig sind. Durch Rotation der im Empfangsstrahlengang geneigt angeordneten Spiegelblende kann das Aufnahmebild abwechselnd in Richtung des optischen Suchers und in Richtung der Sensoreinrichtung abgebildet werden: Sobald sich der Ablenkbereich im Empfangsstrahlengang befindet, wird das Aufnahmebild in Richtung des optischen Suchers abgebildet, während die Lichtbeaufschlagung der Sensoreinrichtung unterbrochen ist. Sobald anschließend die Durchlassöffnung in den Empfangsstrahlengang bewegt worden ist, wird das Aufnahmebild auf die Sensoreinrichtung abgebildet, um dort die Erzeugung von Empfangssignalen zu ermöglichen.

Die Kombination einer derartigen Spiegelblende mit einer optoelektronischen Sensoreinrichtung hat den besonderen Vorteil, dass zum Zeitpunkt der Aufnahme eines Laufbilds mittels der Sensoreinrichtung keine Abschwächung oder Verfälschung des Aufnahmebilds durch die vorgeschaltete Strahlenumlenkeinrichtung erfolgt, wobei dennoch eine optische Beobachtung der aufgenommenen Filmszene mittels des optischen Suchers möglich ist.

Ein weiterer Vorteil besteht darin, dass mittels der Spiegelblende bzw. deren Rotationsfrequenz die Belichtungszeit der optoelektronischen Sensoreinrichtung gesteuert oder beeinflusst werden kann, so dass die Sensoreinrichtung nicht auf eine rein elektronische Steuerung der Bildaufnahmefrequenz und der Belichtungszeit angewiesen ist; eine derartige elektromechanische Steuerung der Belichtungszeit ist jedoch nicht zwingend erforderlich.

Bei einer weiteren Ausführungsform der erfindungsgemäßen Laufbildkamera kann dem optischen Sucher ein Kontroll-Fotosensor nachgeschaltet sein, um eine Kontrollaufnahme der mittels der Sensoreinrichtung aufgenommenen Laufbilder zu ermöglichen. Eine derartige Kontrollaufnahme kann beispielsweise zur Betrachtung der aufgenommenen Filmszene auf einer separaten Anzeigeeinrichtung, beispielsweise einem hochauflösenden Monitor in einem Beobachtungsraum, und/oder zum Zwecke einer zusätzlichen Aufzeichnung der Filmszene zu Dokumentationszwecken erfolgen.

Gemäß einer weiteren Ausführungsform der Erfindung kann entlang des Sucherstrahlengangs eine Strahlenteilereinrichtung vorgesehen sein, die den Sucherstrahlengang nochmals in einen Kontrollaufnahmestrahlengang und einen Beobachtungsstrahlengang aufteilt. Entlang des Beobachtungsstrahlengangs wird das Aufnahmebild in Richtung des optischen Suchers abgebildet, um dort, wie bereits erläutert, eine direkte optische Beobachtung zu ermöglichen. Der Kontrollaufnahmestrahlengang dagegen führt zu einem Kontroll-Fotosensor, der - zusätzlich zu der fotoelektrischen Sensoreinrichtung - eine zusätzliche Kontrollaufnahme der Filmszene zum Zwecke der zusätzlichen Beobachtung an einer Anzeigeeinrichtung oder zum Zwecke einer zusätzlichen Aufzeichnung ermöglicht. Die genannte Strahlenteilereinrichtung ist vorzugsweise durch einen teildurchlässigen Spiegel gebildet.

Bei der erfindungsgemäßen Laufbildkamera kann, wie bereits erwähnt, eine rein elektronische Steuerung der Bildaufnahmefrequenz oder der Belichtungszeit der Sensoreinrichtung vorgesehen sein. Dabei kann die Belichtungszeit der einzelnen Sensorelemente, also der Anfangszeitpunkt und/oder der Endzeitpunkt der Empfangssignalbildung, mittels der Steuereinrichtung für alle oder für einen Teil der Sensorelemente gemeinsam, oder für jedes Sensorelement individuell gesteuert werden. Im erstgenannten Fall ist gewährleistet, dass für alle Sensorelemente dieselbe Belichtungszeit vorgesehen ist, so dass die Helligkeits- und Farbwerte des aufgenommenen Laufbildes originalgetreu aufgenommen werden. Eine gemeinsame Ansteuerung lediglich eines Teils der Sensorelemente oder eine individuelle Ansteuerung aller Sensorelemente unabhängig voneinander ermöglicht dagegen die Erzeugung von Empfangssignalen aufgrund unterschiedlicher Belichtungszeiten bezüglich verschiedener Sensorelemente, so dass beispielsweise bereits als vergleichsweise kontrastarm identifizierte Bildbereiche von vornherein mit einer angepassten Belichtungszeit aufgenommen werden können, um für derartige Bildbereiche dennoch eine ausreichend große Datentiefe zu erzielen.

Alternativ oder zusätzlich zu der rein elektronischen Steuerung der Belichtungszeit kann der Sensoreinrichtung eine Blendeneinrichtung vorgeschaltet sein, die eine Einstellung oder Begrenzung der Belichtungszeit der Sensoreinrichtung ermöglicht. Eine derartige Blendeneinrichtung kann beispielsweise, wie bereits erwähnt, eine drehbewegliche Spiegelblende im Empfangsstrahlengang aufweisen. Alternativ oder zusätzlich hierzu kann die Blendeneinrichtung durch eine drehbewegliche Rotationsblende gebildet sein, die eine oder mehrere Abdunklungsbereiche sowie eine oder mehrere Durchlassöffnungen besitzt, die insbesondere kreissektorförmig sind. Durch Drehantrieb einer derartigen Rotationsblende wird die Sensoreinrichtung abwechselnd mit Empfangslicht beaufschlagt bzw. abgedunkelt.

Die Verwendung einer derartigen drehbeweglichen Blendeneinrichtung kann von besonderem Vorteil sein, wenn die einzelnen Sensorelemente der Sensoreinrichtung sequentiell ausgelesen werden. Sofern in einem solchen Fall die Sensorelemente beispielsweise bei einer matrixförmigen Anordnung zeilenweise beginnend von oben links bis unten rechts ausgelesen werden, kann es zu einer unerwünschten, auf die Matrixzeilen bezogenen Phasenverschiebung kommen, die durch das zwischenzeitliche Verstreichen der für das Auslesen benötigten Zeit bedingt ist. Durch Vorschalten einer drehbewegten Spiegelblende oder Rotationsblende kann eine derartige Phasenverschiebung vermieden oder zumindest - entsprechend dem Einführen bzw. Ausführen der Blendenbegrenzung in und aus dem Empfangsstrahlengang - auf ein akzeptables Ausmaß reduziert werden.

Um die Bildaufnahmefrequenz in erwünschtem Maße variieren zu können, ist es im Falle der Verwendung einer drehbeweglichen Blendeneinrichtung bevorzugt, wenn deren Rotationsfrequenz mittels der Steuereinrichtung variabel gesteuert werden kann. In dem Fall, dass die Empfangssignale der einzelnen Sensorelemente sequentiell, gemäß einem Auslesetakt ausgelesen werden, ist es bevorzugt, wenn dieser Auslesetakt und die Rotationsfrequenz der Blendeneinrichtung mittels der Steuereinrichtung zueinander synchronisiert werden können.

Gemäß einer weiteren vorteilhaften Ausführungsform weist die drehbewegliche Blendeneinrichtung mehrere Durchlassöffnungen auf, wobei die Bildaufnahmefrequenz ein der Anzahl der Durchlassöffnungen entsprechendes Vielfaches der Rotationsfrequenz der Blendeneinrichtung ist. Mit anderen Worten soll zu jedem Zeitpunkt, zu dem eine neue Durchlassöffnung den Empfangsstrahlengang freigibt, ein neues Laufbild aufgenommen werden. Eine derartige Steuerung der Bildaufnahmefrequenz der Sensoreinrichtung und der Rotationsfrequenz der Blendeneinrichtung hat den Vorteil, dass auch bei einer vergleichsweise niedrigen Rotationsfrequenz noch hohe Bildaufnahmefrequenzen erzielt werden können.

Weiterhin ist es von Vorteil, wenn die Größe oder der Winkelbereich einer Durchlassöffnung der drehbeweglichen Blendeneinrichtung variabel gesteuert werden kann, um hierdurch die Belichtungszeit der Sensoreinrichtung auf elektromechanische Weise steuern zu können, ohne gleichzeitig die Rotationsfrequenz der Blendeneinrichtung zu verändern.

Gemäß einer weiteren vorteilhaften Weiterbildung der Erfindung sind die Sensoreinrichtung und die Steuereinrichtung dergestalt ausgebildet, dass die Sensorelemente während einer Unterbrechung des Lichteinfalls mittels der Blendeneinrichtung zur Erzeugung von Referenzempfangssignalen angesteuert werden können. Mit anderen Worten können auch während einer Abdunklung der Sensorelemente Empfangssignale erzeugt werden. Diese dienen als Referenzpegel, die mit Empfangssignalen, die während einer Lichtbeaufschlagung der Sensoreinrichtung erzeugt werden, verrechnet werden können, beispielsweise um ein Signalrauschen oder Temperatureffekte berücksichtigen zu können.

Im Rahmen einer anderen vorteilhaften Weiterbildung der Erfindung ist es möglich, die Sensorelemente mittels der Steuereinrichtung derart anzusteuern, dass aufeinander folgend mehrere Empfangssignale erzeugt werden, die unterschiedlichen Belichtungszeiten entsprechen und dabei einem einzigen aufzunehmenden Laufbild zugeordnet sind. Insbesondere kann nach Beginn der Belichtung eines Empfangselements, also nach dem erforderlichen Rücksetzen oder Löschen dieses Empfangselements, das zwischenzeitlich jeweils akkumulierte Empfangssignal zu mehreren aufeinander folgenden Zeitpunkten abgegriffen werden, ohne dass zwischenzeitlich ein neuerliches Rücksetzen bzw. Löschen von akkumulierter Ladung erfolgt.

Durch eine derartige Ansteuerung werden für dasselbe Sensorelement und für dasselbe Laufbild also mehrere Empfangssignale zu definierten Zeitpunkten erzeugt. Falls für die eigentlich erwünschte Belichtungszeit das Empfangssignal sich in einem Sättigungsbereich der Sensoreinrichtung befindet, kann aufgrund der weiteren, einer kürzeren Belichtungszeit entsprechenden Empfangssignale der korrekte Empfangssignalwert noch nachträglich rechnerisch durch Extrapolation ermittelt werden. Ebenso ist es möglich, im Falle einer Unterbelichtung und eines dementsprechend zu geringen Empfangssignals den korrekten Signalwert aus solchen Empfangssignalen zu extrapolieren, die für höhere Belichtungszeiten ermittelt worden sind.

Ein CMOS-Sensor ist für diese Art der Ansteuerung besonders geeignet, da die Empfangssignale der einzelnen Sensorelemente zerstörungsfrei, also signalerhaltend ausgelesen werden können, beispielsweise in Form von aktuellen Spannungswerten. Außerdem erweist es sich bei einem CMOS-Sensor als Vorteil, dass dieser vergleichsweise hohe Ausleseraten ermöglicht. Dadurch ist mit der erläuterten mehrmaligen. Signalgewinnung kein signifikanter Zeitverlust verbunden, da letztlich lediglich für jedes Sensorelement vorsorglich eine vergleichsweise lange Belichtungszeit angesetzt wird, für die allerdings mehrere Auslesevorgänge erfolgen.

Gemäß einer weiteren bevorzugten Ausgestaltung können die Sensorelemente der Sensoreinrichtung mittels der Steuereinrichtung wahlfrei angesteuert werden, so dass die Empfangssignale also in beliebiger Reihenfolge oder zu beliebigen Zeitpunkten erzeugt und ausgelesen werden können. Dadurch ist es beispielsweise möglich, besondere Bildausschnitte aufzunehmen oder zu Kontrollzwecken bezüglich bestimmter Sensorelemente mehrere Empfangssignale - beispielsweise für unterschiedliche Belichtungszeiten - zu ermitteln. Ein derartiges wahlfreies Auslesen der Sensorelemente ist insbesondere bei der Verwendung eines CMOS-Sensors möglich.

Nach einer weiteren vorteilhaften Ausführungsform der erfindungsgemäßen Laufbildkamera besitzt diese lediglich einen einzigen optoelektronischen Sensor, insbesondere den bereits genannten CMOS-Sensor. Bei einer Verwendung eines einzigen Sensors für alle Farben kann auf die bei Verwendung mehrerer Sensoren erforderlichen vorgeschalteten Teilerprismen verzichtet werden. Dadurch wird eine Verbesserung der Bildqualität erreicht. Weiterhin bewirkt der Wegfall der Teilerprismen, dass der Abstand eines derartigen einzigen Sensors zu der Aufnahmeoptik verringert werden kann, so dass hochwertigere Optiken verwendet werden können.

Um bei einer derartigen Ausführungsform mit einem einzigen Sensor eine Farbunterscheidung zu ermöglichen, kann jedes Sensorelement abwechselnd mit einem Farbfilter, insbesondere einem Rot-, Grün- oder Blaufilter versehen sein. Es ist jedoch auch möglich, eine farbsensitive Sensoreinrichtung zu verwenden, beispielsweise einen Halbleitersensor, der in verschiedenen Tiefen eine unterschiedliche spektrale Absorption besitzt. Dadurch kann jedes einem Bildpunkt entsprechende Sensorelement mehrere Empfangssignale erzeugen, die unterschiedlichen Wellenlängen oder Farben entsprechen. Beispielsweise kann ein derartiges farbauflösendes Sensorelement ein Rot-, Grün- und Blau-Empfangssignal erzeugen.

Alternativ hierzu können zur Realisierung unterschiedlicher spektraler Empfindlichkeiten auch zwei oder drei Sensoren vorgesehen sein.

Ferner kann eine Kühleinrichtung zur aktiven Kühlung der Sensoreinrichtung vorgesehen sein, die beispielsweise ein Peltier-Element oder einen Lüfter aufweist.

In einer bevorzugten Ausführungsform weist die erfindungsgemäße Laufbildkamera wenigstens eine digitale Speichereinrichtung zum Speichern der aufgenommenen und digitalisierten Empfangssignale auf. Eine derartige Speichereinrichtung ist bevorzugt in einer austauschbaren Weise an die Kamera ankoppelbar, um ein schnelles Auswechseln zu ermöglichen.

Die genannte Digitalisierungseinrichtung ist mit der Speichereinrichtung über wenigstens eine Datenschnittstelle zur Weiterleitung der jeweils digitalisierten Empfangssignale verbunden, wobei vorzugsweise eine der Anzahl der Digitalisierungseinrichtungen entsprechende Anzahl von Datenschnittstellen vorgesehen ist.

Das Speichern der Empfangssignale in der Speichereinrichtung erfolgt bevorzugt mit einer großen Bandbreite, also ohne Reduktion der bei der Bildaufnahme akquirierten Daten. Mit anderen Worten wird ein großer Speicherplatzbedarf in Kauf genommen, um keinen irreversiblen Verlust von Laufbilddaten durch Datenkomprimierung oder durch Bildaufbereitung wie beispielsweise Farb- oder Helligkeitsmodifikation zu riskieren. Eine mögliche Datenkomprimierung oder Bildaufbereitung soll erst anhand einer Kopie der aufgenommenen, in der Speichereinrichtung abgelegten Originaldaten erfolgen.

Gemäß einer bevorzugten Ausführungsform kann die Speichereinrichtung mittels der Steuereinrichtung zu einem zusätzlichen Speichern wenigstens eines Aufnahmeparameters gesteuert werden, um mit den Laufbilddaten beispielsweise die aktuelle Bildaufnahmefrequenz, die aktuelle Blendeneinstellung des Aufnahmeobjektivs oder eine Textinformation über die aufgenommene Filmszene (Take) abzuspeichern. Derartige Aufnahmeparameter können zu Dokumentationszwecken oder für eine entsprechende Einstellung der Kamera für eine spätere Wiederaufnahme der Dreharbeiten herangezogen werden.

Ferner kann die erfindungsgemäße Laufbildkamera mit einer Uhr ausgestattet sein, die eine Uhrzeit bereitstellt, die gemeinsam mit Laufbilddaten oder mit Aufnahmeparametern gespeichert werden kann, um eine Zuordnung dieser Daten zu definierten Zeitpunkten zu ermöglichen.

Weiterhin kann seitens der Speichereinrichtung eine Identifizierungseinrichtung vorgesehen sein, die die Übermittlung eines dieser Speichereinrichtung entsprechenden Identifizierungscodes an die Laufbildkamera ermöglicht. Dadurch kann die Steuereinrichtung der Kamera beispielsweise ein Auswechseln der Speichereinrichtung, das Gesamtfassungsvermögen oder das noch verbleibende Fassungsvermögen der Speichereinrichtung erkennen. Eine weitere Anwendungsmöglichkeit einer solchen Identifizierungseinrichtung besteht darin, dass zuvor an die Speichereinrichtung übermittelte Aufnahmeparameter wieder zurück in die Kamera geladen werden können, um beispielsweise eine automatische Einstellung der Kamera entsprechend einer früheren Einstellung zu ermöglichen. Die genannte Identifizierungseinrichtung kann beispielsweise einen Mikrocontroller und einen nichtflüchtigen Speicher aufweisen.

Eine Schwierigkeit bei der Gewinnung der Empfangssignale mit einer hohen Datentiefe und einer dementsprechend hohen Datenrate besteht darin, dass die Speichereinrichtung eine für die üblichen Aufnahmedauern ausreichende Kapazität besitzen muss. Die Speichereinrichtung muss deshalb entweder mit einem vergleichsweise großen Fassungsvermögen ausgestattet sein, oder es muss ein Wechsel der Speichereinrichtung während der laufenden Aufnahme möglich sein.

Bei einer weiteren vorteilhaften Ausführungsform ist deshalb keine physische Kopplung zwischen der Kamera und der Speichereinrichtung vorgesehen, sondern die abzuspeichernden Laufbilddaten oder Aufnahmeparameter werden drahtlos an die Speichereinrichtung ermittelt. Zu diesem Zweck kann die Laufbildkamera einen Funksender und die Speichereinrichtung einen entsprechenden Funkempfänger besitzen. Diese Ausführungsform hat den Vorteil, dass die Baugröße der Speichereinrichtung oder mehrerer zu verwendender Speichereinrichtungen nicht die Handhabung der Kamera einschränkt. Auch das Gewicht der Kamera kann auf diese Weise deutlich reduziert werden.

Außerdem kann eine derartige drahtlose Ankopplung von Speichereinrichtungen an die Laufbildkamera einen unterbrechungsfreien Wechsel der Speichereinrichtung vereinfachen, um nicht aufgrund des erschöpften Fassungsvermögens einer einzigen Speichereinrichtung eine Filmaufnahme vorzeitig beenden zu müssen oder Bilddaten zu verlieren. Ein derartiger unterbrechungsfreier Wechsel der Datenübertragung an mehrere Speichereinrichtungen nacheinander kann beispielsweise nach dem Prinzip des "Roaming" erfolgen, wie es beispielsweise in Zusammenhang mit dem Wechsel einer Sende-/Empfangsstation bei Mobilfunktelefonen bekannt ist.

Alternativ oder zusätzlich ist es bevorzugt, wenn eine Zwischenspeichereinrichtung vorgesehen ist, die als Datenpuffer dient, um die letztlich in einer Speichereinrichtung abzuspeichernden Daten vorläufig aufzunehmen und an diese Speichereinrichtung weiterzugeben. Eine solche Zwischenspeichereinrichtung ist - zugunsten einer erhöhten Datensicherheit -insbesondere bei einem Auswechseln von Speichereinrichtungen während einer laufenden Filmaufnahme von Vorteil. Beispielsweise kann im Falle der erläuterten Funkübertragung von abzuspeichernden Daten an unterschiedliche Speichereinrichtungen eine derartige Zwischenspeichereinrichtung seitens der Laufbildkamera oder seitens einer entfernt von der Kamera angeordneten Speichereinrichtung vorgesehen sein.

Zu der erläuterten Speichereinrichtung ist noch anzumerken, dass diese wenigstens eine Ausgangsschnittstelle zur Ausgabe der gespeicherten Daten besitzen kann. Auch diese Ausgangsschnittstelle kann beispielsweise als Funksender ausgebildet sein, um eine drahtlose Weiterleitung der Daten zu ermöglichen.

Die Speichereinrichtung kann in einer vorteilhaften Ausführungsform zur Ausgabe der gespeicherten Daten mit einer Ausgaberate gesteuert werden, die von der Rate des Einlesens der abzuspeichernden Daten verschieden ist, beispielsweise um eine nachträgliche Sicherung der Daten innerhalb eines - vergleichsweise langsamen - Magnetbandspeichers zu ermöglichen.

Die Speichereinrichtung kann insbesondere einen magnetischen Speicher (beispielsweise eine Festplatte), einen optischen Speicher (beispielsweise eine beschreibbare CD oder DVD oder einen holographischen Speicher), einen magnetooptischen Speicher, einen Halbleiterspeicher (beispielsweise einen RAM-Speicher oder ein Flash-Memory), oder mehrere oder eine Kombination dieser Speichermedien aufweisen.

Schließlich ist es bevorzugt, wenn die Laufbildkamera einen modularen Aufbau besitzt, um ein einfaches und rasches Auswechseln von elektronischen, optischen und mechanischen Modulen zu ermöglichen, und um ferner die Verwendung herkömmlicher Kamerakomponenten zu gestatten. Insbesondere kann die Sensoreinrichtung gemeinsam mit der Steuereinrichtung, ferner eine Aufnahmeoptik, die Strahlenumlenkeinrichtung mit oder ohne mattierte Scheibe, eine Sucheroptik oder eine Speichereinrichtung jeweils eine eigene derartige Moduleinheit bilden.

Weitere bevorzugte Ausführungsformen der Erfindung sind in den Unteransprüchen genannt. Die Erfindung wird nachfolgend beispielhaft unter Bezugnahme auf die Zeichnungen erläutert; in diesen zeigen:
- Fig. 1 und 2: zwei verschiedene Ausführungsformen einer Laufbildkamera,
- Fig. 3: eine mögliche Ausführungsform einer Sensoreinrichtung, und
- Fig. 4 und 5: Zeitdiagramme zur Illustrierung verschiedener Steuerabfolgen mit unterschiedlichen Bildaufnahmedauern.

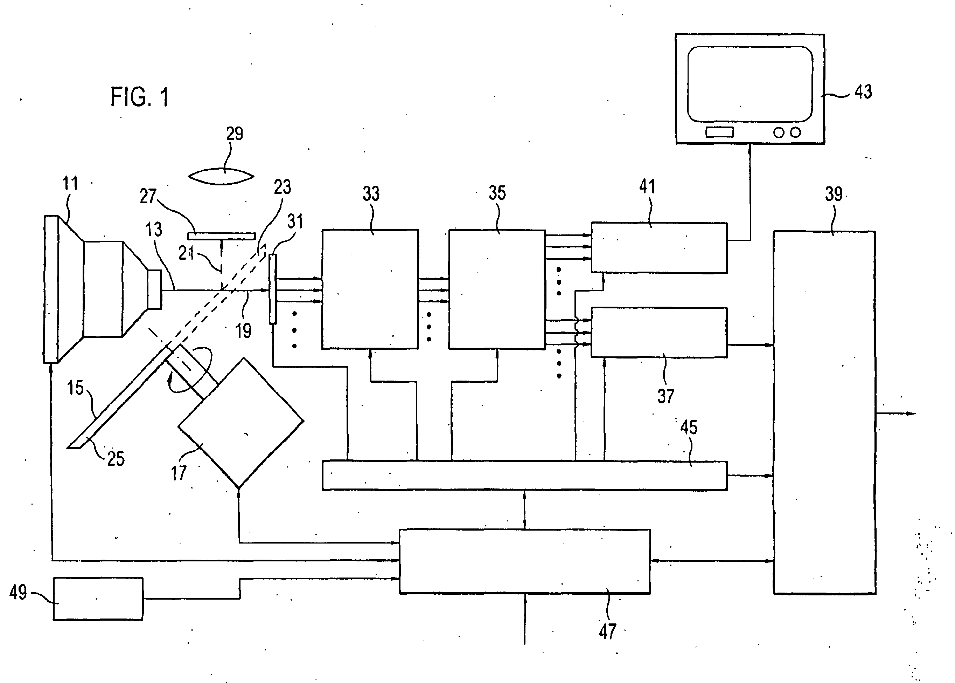

Fig. 1 zeigt einen möglichen Aufbau der erfindungsgemäßen Laufbildkamera. Diese besitzt eine Aufnahmeoptik 11, die das aktuell aufzuzeichnende Laufbild entlang eines Empfangsstrahlengangs 13 abbildet. Mittels einer Spiegelblende 15, die durch eine Antriebseinheit 17 zu einer Rotationsbewegung angetrieben werden kann, wird das entlang des Empfangsstrahlengangs 13 einfallende Licht abwechselnd in Richtung eines Aufnahmestrahlengangs 19 durchgelassen oder in Richtung eines Sucherstrahlengangs 21 umgelenkt. Zu diesem Zweck besitzt die Spiegelblende 15 eine Durchlassöffnung 23 und einen verspiegelten Ablenkbereich 25.

Sofern sich der Ablenkbereich 25 im Empfangsstrahlengang 13 befindet, wird das von der Aufnahmeoptik 11 erfasste Bild auf eine mattierte Glasscheibe 27 abgebildet, so dass auf dieser ein reales Bild entsteht, das mittels einer Sucheroptik 29 vom Kameramann beobachtet werden kann.

Dagegen wird zu den Zeitpunkten, zu denen sich - wie in Fig. 1 gezeigt - die Durchlassöffnung 23 im Empfangsstrahlengang 13 befindet, das aufzunehmende Laufbild von der Aufnahmeoptik 11 ohne weitere Umlenkung auf eine optoelektronische Sensoreinrichtung 31 abgebildet, die sich bezüglich der Aufnahmeoptik 11 in der gleichen optischen Lage wie die Glasscheibe 27 befindet. Die Sensoreinrichtung 31 besitzt in einer matrixförmigen Anordnung mehrere Sensorelemente, die infolge der Lichtbeaufschlagung durch die Durchlassöffnung 23 der Spiegelblende 15 hindurch ein jeweiliges Empfangssignal erzeugen können, das der Lichtintensität und der Belichtungszeit entspricht. Beispielsweise kann die Sensoreinrichtung 31 eine Anordnung von 1920 x 1080 oder 2880 x 2160 derartigen Sensorelementen aufweisen.

Die von der Sensoreinrichtung 31 erzeugten Empfangssignale werden parallel oder teilweise parallel einer Verstärkungseinrichtung 33 zugeführt, die eine entsprechende Anzahl von elektronischen Verstärkern aufweist. Die derartig verstärkten Empfangssignale werden in einer nachgeschalteten Digitalisierungseinrichtung 35 durch eine entsprechende Anzahl von Analog/Digital-Wandlern digitalisiert.

Die Digitalisierungseinrichtung 35 ist über eine Datenschnittstelle 37 mit einer Speichereinrichtung 39 verbunden, die die aufgenommenen und digitalisierten Empfangssignale beispielsweise auf einer magnetischen Festplatte in Echtzeit aufzeichnet.

Über eine weitere mit der Digitalisierungseinrichtung 35 verbundenen Datenschnittstelle 41 können die Empfangssignale einem Anzeigemonitor 43 zugeführt werden, um an diesem - auch an einem von der Kamera entfernten Ort - eine gleichzeitige Beobachtung des aufgenommenen Laufbildfilms zu ermöglichen.

Der Datenfluss von der Sensoreinrichtung 31 über die Verstärkungseinrichtung 33 und die Digitalisierungseinrichtung 35 an die Datenschnittstelle 37 und die Speichereinrichtung 39 einerseits und an die Datenschnittstelle 41 und den Anzeigemonitor 43 andererseits wird durch eine Elektroniksteuereinrichtung 45 gesteuert, die zu diesem Zweck mit den genannten Komponenten 31, 33, 35, 37, 39, 41, 43 verbunden ist. Insbesondere steuert die Elektroniksteuereinrichtung 45 das Auslesen der Empfangssignale der einzelnen Sensorelemente der Sensoreinrichtung 31.

Außerdem ist eine Kamerasteuereinrichtung 47 vorgesehen, die mit der Aufnahmeoptik 11, mit der Antriebseinheit 17 für die rotierende Spiegelblende 15, mit der Elektroniksteuereinrichtung 45, mit der Speichereinrichtung 39 und ferner mit einem Kamerasensor 49 verbunden ist, der beispielsweise die Helligkeit der aufzunehmenden Filmszene oder einzelner Bereiche hiervon detektiert. Die Kamerasteuereinrichtung 47 synchronisiert den Ablauf der digitalen Laufbildaufnahme mit der Steuerung oder Signalverarbeitung der weiteren Kamerakomponenten, und sie ermöglicht über eine - in Fig. 1 nicht gezeigte - Anwenderschnittstelle die Eingabe von Einstellparametern durch den Kameramann.

Die Kamera gemäß Fig. 1 bildet somit eine digitale Laufbildkamera, die das Aufnehmen und Abspeichern von Bildsignaldaten in einem digitalen Format ermöglicht, und die gleichzeitig eine direkte optische Beobachtung der aufgenommenen Filmszene über die Sucheroptik 29 sowie eine elektrooptische Kontrollbeobachtung der aufgenommenen Daten an dem Anzeigemonitor 43 erlaubt.

Erfindungsgemäß kann die Frequenz, mit der die einzelnen, aufeinander folgenden Laufbilder mittels der Sensoreinrichtung 31 aufgenommen werden, durch Zusammenwirken der Kamerasteuereinrichtung 47 und der Elektroniksteuereinrichtung 45 mit der Sensoreinrichtung 31 variiert werden, und zwar gemäß einem über die Anwenderschnittstelle und die Kamerasteuereinrichtung 47 einstellbaren Vorgabewert. Dadurch kann die Bildaufnahmefrequenz vor oder während einer Aufnahme kontinuierlich verringert oder erhöht werden, um Zeitraffer- bzw. Zeitlupenaufnahmen durchzuführen.

Bei einer derartigen Variierung der Bildaufnahmefrequenz wird zum einen mittels der Elektroniksteuereinrichtung 45 die Frequenz geändert, mit der die Empfangssignale der Sensoreinrichtung 31 ausgelesen werden, welche gemeinsam einen Bilddatensatz bilden. Zum anderen wird über die Kamerasteuereinrichtung 47 die Rotationsfrequenz der Antriebseinheit 17 und somit der Spiegelblende 15 angepasst, um eine Belichtung bzw. Abdunklung der Sensoreinrichtung 31 mit einer verminderten oder erhöhten Rate zu bewirken.

Bei dem in Fig. 1 gezeigten Ausführungsbeispiel ist die Sensoreinrichtung 31 durch einen CMOS-Sensor gebildet, dessen Empfangselemente individuell angesteuert werden können, um zu einem beliebigen Zeitpunkt ein Rücksetzen oder ein nachfolgendes Auslesen der fotoelektrischen Ladung - bzw. eines entsprechenden Spannungssignals zu bewirken.

Bei einem derartigen CMOS-Sensor wird das ein Sensorelement beaufschlagende Licht in eine fotoelektrische Ladung und dadurch letztlich in ein Spannungssignal umgesetzt, dessen Wert während der Dauer der Lichtbeaufschlagung zunimmt. Ein einzelnes Sensorelement kann kurzgeschlossen und somit rückgesetzt werden, um den Spannungswert auf Null zu setzen und somit die Belichtungsdauer zu einem definierten Zeitpunkt beginnen zu lassen. Ebenso kann das Auslesen dieses Sensorelements zu einem beliebigen, definierten Zeitpunkt erfolgen, um dadurch ein Empfangssignal zu erhalten, das einer vorgegebenen Belichtungsdauer entspricht. Da also sowohl der Anfangszeitpunkt als auch der Endzeitpunkt der Belichtungsdauer beliebig eingestellt werden können, kann letztlich auch die Frequenz, mit der die Bilddatensätze aller Sensorelemente gemeinsam erzeugt werden, variiert werden, wie nachfolgend noch erläutert wird. Der CMOS-Sensor 31 ermöglicht somit eine Variierung der Bildaufnahmefrequenz, die bei einem Sensor mit festem Auslesetakt - wie beispielsweise bei einem CCD-Sensor - nicht möglich ist.

Bei der gezeigten Sensoreinrichtung 31 erfolgt die Steuerung der Belichtungszeit und der Bildaufnahmefrequenz vorzugsweise rein elektronisch. Alternativ oder unterstützend ist es jedoch auch möglich, die Abdunklung bzw. Lichtbeaufschlagung der Sensoreinrichtung 31 über die Spiegelblende 15 und deren Ablenkbereich 25 und Durchlassöffnung 23 zu steuern oder zu beeinflussen.

Zu der Kamera gemäß Fig. 1 ist noch anzumerken, dass die Sensoreinrichtung 31, die Verstärkungseinrichtung 33 und vorzugsweise auch die Digitalisierungseinrichtung 35 durch einen einzigen Baustein realisiert sein können. In diesem Fall ist jedem Sensorelement in integrierter Bauweise ein eigener Verstärker bzw. ein eigener Analog/Digital-Wandler zugeordnet. Ferner können Schaltungen zur Impedanzanpassung vorgesehen sein.

Außerdem kann das Auslesen, das Verstärken oder das Digitalisieren der Empfangssignale der Sensorelemente selbstverständlich auch vollständig oder teilweise sequentiell erfolgen.

Hinsichtlich des Abspeicherns der digitalen Bilddaten ist noch anzumerken, dass durch die Elektroniksteuereinrichtung 45 ein derartiges Datenformat vorgegeben werden kann, das nicht nur das Abspeichern der digitalisierten Empfangssignale der Sensoreinrichtung 31 erlaubt, sondern auch das zusätzliche Speichern von zugehörigen Aufnahmeparametern. Beispielsweise können die mittels der Kamerasteuereinrichtung 47 eingestellte Blendenöffnung der Aufnahmeoptik 11, die mittels des Kamerasensors 49 detektierten Helligkeitswerte, eine von einer - nicht gezeigten - Uhr vorgegebene Referenzzeit oder die aktuelle Bildaufnahmefrequenz als Aufnahmeparameter in der Speichereinrichtung 39 mit abgespeichert werden.

Zwischen der Speichereinrichtung 39 und der Datenschnittstelle 37 sowie zwischen dem Anzeigemonitor 43 und der Datenschnittstelle 41 kann auch eine drahtlose Verbindung, insbesondere eine Funkverbindung vorgesehen sein. Außerdem ist es möglich, die mittels der Datenschnittstelle 41 an den Anzeigemonitor 43 übermittelten Bilddaten entsprechend der von dem Anzeigemonitor 43 überhaupt wiedergebbaren Auflösung und Farbvielfalt hinsichtlich ihrer Datentiefe zu reduzieren.

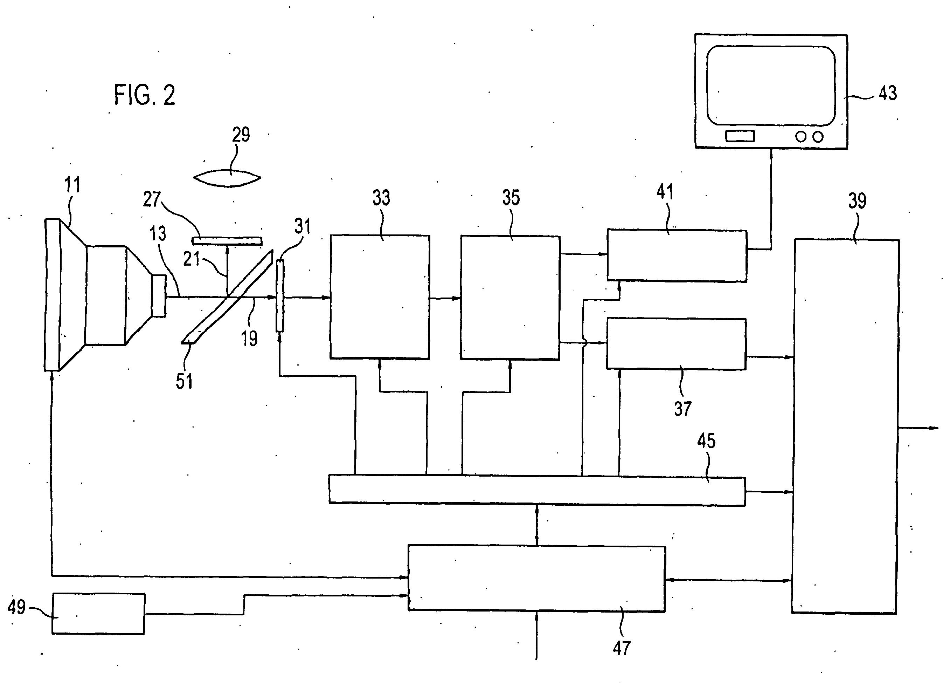

Fig. 2 zeigt eine weitere Ausführungsform einer Laufbildkamera, wobei der Ausführungsform gemäß Fig. 1 entsprechende Komponenten mit denselben Bezugszeichen gekennzeichnet sind.

Im Unterschied zu der Ausführungsform gemäß Fig. 1 ist als Strahlenumlenkeinrichtung ein teildurchlässiger Strahlenteilerspiegel 51 vorgesehen, der zu jedem Zeitpunkt einen Teil des durch die Aufnahmeoptik 11 abgebildeten Bildes in Richtung der Sensoreinrichtung 31 durchlässt und einen weiteren Teil auf die mattierte Glasscheibe 27 umlenkt. Somit wird bei dieser Ausführungsform auf eine rotierende Spiegelblende verzichtet, so dass auch keine elektromechanische Antriebseinheit zum Antrieb einer solchen Spiegelblende erforderlich ist.

Ferner ist bei der Ausführungsform gemäß Fig. 2 ein rein sequentielles Auslesen der Sensorelemente der Sensoreinrichtung 31 sowie eine serielle Weiterleitung der Empfangssignale an eine Verstärkungseinrichtung 33 und eine Digitalisierungseinrichtung 35 vorgesehen. Die Verstärkungseinrichtung 33 und die Digitalisierungseinrichtung 35 benötigen deshalb jeweils nur einen einzigen Signalverstärker bzw. einen einzigen Analog/Digital-Wandler. Allerdings kann hier auch - zumindest teilweise - ein paralleles Auslesen, Verstärken oder Digitalisieren der Empfangssignale vorgesehen sein.

Zu der Ausführungsform gemäß Fig. 2 ist noch anzumerken, dass diese im Aufnahmestrahlengang 19 zwischen dem Strahlenteilerspiegel 51 und der Sensoreinrichtung 31 zusätzlich eine Rotationsblende mit wenigstens einer Durchlassöffnung und einem Abdunklungsbereich aufweisen kann. Durch Drehantrieb einer derartigen Rotationsblende kann die Belichtungszeit der Sensoreinrichtung gesteuert oder hinsichtlich einer elektronischen Steuerung zusätzlich elektromechanisch unterstützt werden.

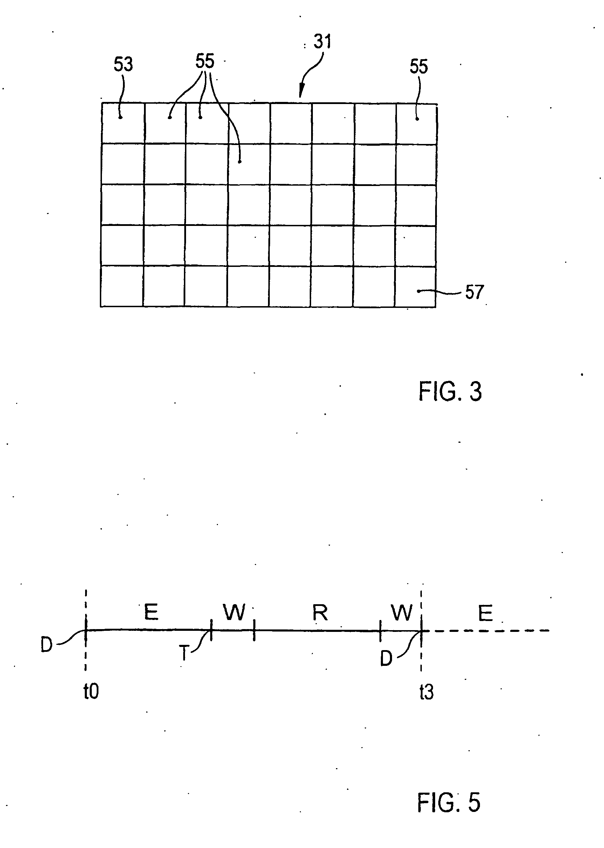

Fig. 3 zeigt schematisch eine mögliche matrixförmige Unterteilung der lichtempfindlichen Vorderseite einer Sensoreinrichtung 31 in mehrere Sensorelemente 53, 55, 57, wobei zur vereinfachten Darstellung lediglich eine geringe Anzahl von Sensorelementen gezeigt ist.

Ein sequentielles Auslesen der Empfangssignale dieser Sensorelemente 53, 55, 57, wie im Zusammenhang mit Fig. 2 erwähnt, kann beispielsweise folgendermaßen geschehen: Beginnend mit dem Sensorelement 53, das in der Darstellung gemäß Fig. 3 oben links gezeigt ist, werden zunächst alle Sensorelemente 53, 55 der obersten Zeile von links nach rechts nacheinander und in definierten Zeitintervallen rückgesetzt. Mit anderen Worten werden die bislang an diesen Sensorelementen 53, 55 fotoelektrisch erzeugten Spannungswerte in definierten Zeitabständen auf Null gesetzt.

Anschließend werden die Sensorelemente 55 der zweiten und der folgenden Zeilen in entsprechender Weise, also nacheinander jeweils von links nach rechts rückgesetzt, bis zuletzt das Sensorelement 57 unten rechts erreicht und ebenfalls rückgesetzt bzw. gelöscht wird. Nach dem Rücksetzen eines jeden Sensorelements 53, 55, 57 wird - sofern eine Lichtbeaufschlagung erfolgt - unmittelbar mit der Erzeugung und Ansammlung von fotoelektrischer Ladung begonnen, so dass beispielsweise zum Zeitpunkt des Rücksetzens des Sensorelements 57 in dem Sensorelement 53 bereits eine gewisse Signalladung erzeugt worden ist.

Nach einem derartigen sequentiellen Rücksetzen aller Sensorelemente 53, 55, 57 werden die Empfangssignale dieser Sensorelemente ausgelesen, und zwar wiederum zu definierten Zeitpunkten und in der erläuterten Reihenfolge, also zeilenweise von links nach rechts beginnend mit dem Sensorelement 53 bis zu dem Sensorelement 57. Dadurch wird für jedes Sensorelement 53, 55, 57 ein fotoelektrischer Spannungswert bzw. ein Empfangssignal ausgelesen, das einer bestimmten, bekannten Belichtungszeit entspricht. Ein derartiges sequentielles Rücksetzen und Auslesen der Sensorelemente 53, 55, 57 kann beispielsweise durch die Elektroniksteuereinrichtung 45 gemäß Fig. 1 und 2 veranlasst werden.

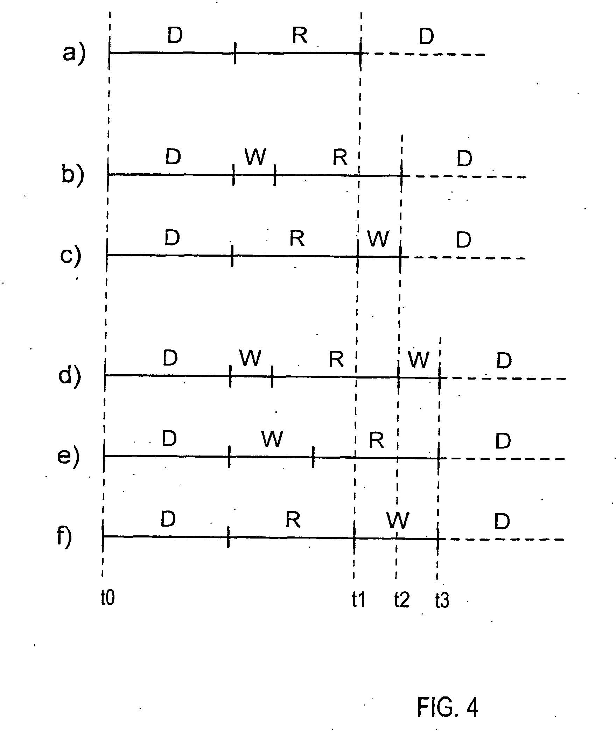

Fig. 4 zeigt in einem Zeitdiagramm, wie bei einem sequentiellen Rücksetzen und Auslesen von Sensorelementen 53, 55, 57 gemäß Fig. 3 eine variable Bildaufnahmefrequenz verwirklicht werden kann. Dargestellt sind beispielhaft sechs mögliche Steuerabläufe (a) bis (f), jeweils beginnend ab einem Zeitpunkt t0. Für diese Steuerabläufe sind Löschintervalle D, Ausleseintervalle R und Warteintervalle W gezeigt, die jeweils zeitlich aufeinander folgen.

Ein Löschintervall D entspricht der Dauer des sequentiellen Rücksetzens aller Sensorelemente 53, 55, 57, wie anhand Fig. 3 erläutert. In entsprechender Weise entspricht ein Ausleseintervall R der Zeitdauer des sequentiellen Auslesens der Sensorelemente 53, 55, 57 gemäß Fig. 3. Die Löschintervalle D und die Ausleseintervalle R besitzen stets eine konstante Zeitdauer, sofern mit einem konstanten Rücksetz- und Auslesetakt gearbeitet wird.

Indem zwischen einem Rücksetzvorgang und einem Auslesevorgang, oder zwischen einem Auslesevorgang und einem Rücksetzvorgang für die Dauer unterschiedlicher Warteintervalle W gewartet wird, können die Bildaufnahmefrequenz und/ oder die Belichtungszeit variiert werden.

Beispielsweise ist in Fig. 4 für die Steuerabfolge (b) gezeigt, dass nach dem sequentiellen Rücksetzen aller Sensorelemente 53, 55, 57 innerhalb des Löschintervalls D zunächst ein Warteintervall W verstreicht, bevor während eines Ausleseintervalls R die Sensorelemente 53, 55, 57 nacheinander ausgelesen werden und unmittelbar anschließend während eines weiteren Löschintervalls D wieder sequentiell rückgesetzt werden. Dadurch beansprucht ein vollständiger Bildaufnahmezyklus eine Dauer t2.

Dieselbe Dauer t2 für einen vollständigen Bildaufnahmezyklus wird auch benötigt, falls unmittelbar nach Beendigung des Löschintervalls D das Ausleseintervall R folgt und erst nach diesem Auslesen ein Warteintervall W verstreicht, bevor die Sensorelemente 53, 55, 57 erneut rückgesetzt werden. Dies ist in Fig. 4 für die Steuerabfolge (c) gezeigt.

Somit wird durch die Steuerabfolgen (b) und (c) dieselbe Dauer t2 eines vollständigen Bildaufnahmezyklus benötigt, so dass in beiden Fällen dieselbe Bildaufnahmefrequenz erzielt wird. Allerdings ist bei der Steuerabfolge (b) die Belichtungszeit verlängert, da vor dem Auslesen der Sensorelemente 53, 55, 57 erst ein Warteintervall W verstreicht.

Eine größere Dauer t3 eines vollständigen Bildaufnahmezyklus und somit eine verringerte Bildaufnahmefrequenz kann erreicht werden, indem die Sensoreinrichtung 31 derart gesteuert wird, dass längere und/oder mehrere Warteintervalle W zwischen dem Rücksetzen und Auslesen der Sensorelemente 53, 55, 57 verstreichen. Dies ist beispielhaft für die Steuerabfolgen (d), (e) und (f) gezeigt.

Beispielsweise wird bei der Steuerabfolge (d) sowohl vor als auch nach dem sequentiellen Auslesen der Sensorelemente 53, 55, 57 für die Dauer eines Warteintervalls W abgewartet, bevor erneut mit dem Auslesen bzw. Rücksetzen begonnen wird. Dadurch wird dieselbe Belichtungszeit wie bei der Steuerabfolge (b) erreicht, jedoch bei einer verringerten Bildaufnahmefrequenz.

Die Steuerabfolge (e) gemäß Fig. 4 zeigt demgegenüber das Verstreichen eines längeren Warteintervalls W nach Beendigung des sequentiellen Rücksetzens aller Sensorelemente 53, 55, 57, wobei unmittelbar nach dem nachfolgenden Auslesen der Sensorelemente wieder mit dem Rücksetzen begonnen wird. Bei dieser Steuerabfolge wird dieselbe Dauer t3 eines vollständigen Bildaufnahmezyklus und somit dieselbe Bildaufnahmefrequenz erreicht, wie bei der Steuerabfolge (d). Allerdings ist hier die Belichtungszeit - aufgrund des verlängerten Warteintervalls W - vergrö-ßert.

Auch bei der Steuerabfolge (f) wird dieselbe Bildaufnahmefrequenz erzielt wie bei den Steuerabfolgen (d) und (e). Indem hier ein vergleichsweise langes Warteintervall W zwischen der Beendigung des Auslesens des letzten Sensorelements 57 und dem Zeitpunkt des Rücksetzens des ersten Sensorelements 53 verstreicht, wird diese vergleichsweise geringe Bildaufnahmefrequenz bei einer kurzen Belichtungszeit erreicht.

Die höchstmögliche Bildaufnahmefrequenz, entsprechend einer kürzestmöglichen Dauer t1 eines vollständigen Bildaufnahmezyklus, ergibt sich, falls das Löschintervall D und das Ausleseintervall R ohne zwischenzeitliche Warteintervalle jeweils unmittelbar aufeinander folgen. Dies ist in Fig. 4 als Steuerabfolge (a) gezeigt.

Zu den in Fig. 4 gezeigten Steuerabfolgen ist noch anzumerken, dass diese rein elektronisch verwirklicht werden können, nämlich durch entsprechende Ansteuerung der Sensorelemente 53, 55, 57 mittels der in Fig. 1 und 2 gezeigten Elektroniksteuereinrichtung 45.

Die Dauer der unterschiedlichen Warteintervalle W kann beispielsweise in Inkrementen desjenigen hochfrequenten Takts gewählt werden, mit dem die Sensorelemente 53, 55, 57 sequentiell rückgesetzt bzw. ausgelesen werden. Allerdings ist es auch möglich, variable Dauern für die Wartezeitintervalle vorzusehen, um die Bildaufnahmefrequenz stufenlos verändern zu können. Ebenso ist es möglich, den hochfrequenten Takt, mit dem die Sensorelemente 53, 55, 57 nacheinander rückgesetzt oder ausgelesen werden, variierbar zu steuern.

Außerdem ist zu den erläuterten Steuerabfolgen anzumerken, dass - aufgrund der Verwendung eines CMOS-Sensors 31 - die Ansteuerung der Sensorelemente gemäß Fig. 3 auch in einer beliebigen anderen Reihenfolge erfolgen kann, beispielsweise beginnend mit dem Sensorelement 55, das in der Darstellung gemäß Fig. 3 oben rechts gezeigt ist, sequentiell von rechts nach links oder von oben nach unten, oder völlig wahlfrei, um bestimmte Effekte zu erzielen.

Ferner kann alternativ zu der anhand von Fig. 3 und 4 erläuterten rein sequentiellen Belichtung der Sensorelemente 53, 55, 57 ein so genannter Simultan-Shutter realisiert werden. Hierfür können die Empfangssignale aller Sensorelemente 53, 55, 57 gleichzeitig rückgesetzt werden. Außerdem ist jedem Sensorelement 53, 55, 57 ein Speicherelement, beispielsweise in Form eines Kondensators zugeordnet, in den jeweils die für das betreffende Sensorelement 53, 55, 57 erzeugte fotoelektrische Ladung verschoben werden kann. Die Speicherelemente sind dabei so verschaltet bzw. ansteuerbar, dass nach diesem Ladungstransfer innerhalb der Speicherelemente auch bei weiterer Lichtbeaufschlagung des Sensors 31 keine weitere Erhöhung des jeweiligen Empfangssignals erfolgt. Auch dieser Ladungstransfer kann für alle Sensorelemente 53, 55, 57 gleichzeitig durchgeführt werden.

Da somit sowohl der Anfangszeitpunkt als auch der Endzeitpunkt der Belichtung für alle Sensorelemente 53, 55, 57 gleich ist, unterliegen die Sensorelemente hinsichtlich ihrer jeweiligen Belichtungsdauer keiner Phasenverschiebung relativ zueinander.

Nach dem simultanen Ladungstransfer kann das Auslesen der Empfangssignale, beispielsweise durch Abgreifen der an den Speicherelementen anliegenden Spannungswerte, in beliebiger Reihenfolge erfolgen, beispielsweise sequentiell, gruppenweise parallel oder vollständig parallel. Anschließend werden die Sensorelemente 53, 55, 57 wieder gleichzeitig rückgesetzt.

Eine erwünschte Änderung der Bildaufnahmefrequenz und/oder der Belichtungszeit kann bei einem derartigen Simultan-Shutter dadurch realisiert werden, dass der Anfangszeitpunkt und/oder der Endzeitpunkt der simultanen Belichtung der Sensorelemente 53, 55, 57 variiert werden. Beispielsweise kann zwischen dem simultanen Rücksetzen aller Sensorelemente 53, 55, 57 und dem simultanen Verschieben der fotoelektrischen Ladung in die Speicherelemente, oder zwischen dem simultanen Verschieben und dem simultanen Rücksetzen für die Dauer unterschiedlicher Warteintervalle W gewartet werden.

Fig. 5 zeigt eine derartige simultane Steuerabfolge, die hinsichtlich der Dauer t3 eines Bildaufnahmeaufnahmezyklus und somit hinsichtlich der Bildaufnahmefrequenz der sequentiellen Steuerabfolge (d) gemäß Fig. 4 entspricht. Hier wird zu einem Löschzeitpunkt D das simultane Rücksetzen aller Sensorelemente 53, 55, 57 ausgelöst. Während eines nachfolgenden Belichtungsintervalls E werden die Sensorelemente 53, 55, 57 gleichzeitig belichtet. Zu einem Transferzeitpunkt T werden die fotoelektrischen Ladungen der Sensorelemente 53, 55, 57, wie erläutert, simultan in das jeweils zugeordnete Speicherelement verschoben. Nach Verstreichen eines ersten Warteintervalls W werden die Speicherelemente während eines Ausleseintervalls R ausgelesen. Nach Verstreichen eines weiteren Warteintervalls W, und zwar zu einem Löschzeitpunkt D, werden die Sensorelemente 53, 55, 57 wieder simultan rückgesetzt, um ein neues Belichtungsintervall E einzuleiten.

In entsprechender Weise wie im Zusammenhang mit Fig. 4 erläutert können die in Fig. 5 gezeigten Warteintervalle W jeweils variiert, insbesondere verlängert, verkürzt oder auf Null gesetzt werden, um für alle Sensorelemente 53, 55, 57 synchron die Dauer t3 eines Bildaufnahmeaufnahmezyklus und somit die Bildaufnahmefrequenz und ferner die Belichtungszeit E zu variieren.

### Bezugszeichenliste

- 11: Aufnahmeoptik
- 13: Empfangsstrahlengang
- 15: Spiegelblende
- 17: Antriebseinheit
- 19: Aufnahmestrahlengang
- 21: Sucherstrahlengang
- 23: Durchlassöffnung
- 25: Ablenkbereich
- 27: Glasscheibe
- 29: Sucheroptik
- 31: Sensoreinrichtung
- 33: Verstärkungseinrichtung
- 35: Digitalisierungseinrichtung
- 37: Datenschnittstelle
- 39: Speichereinrichtung
- 41: Datenschnittstelle
- 43: Anzeigemonitor
- 45: Elektroniksteuereinrichtung
- 47: Kamerasteuereinrichtung .
- 49: Kamerasensor
- 51: Strahlenteilerspiegel
- 53: Sensorelement
- 55: Sensorelement
- 57: Sensorelement

- D: Löschintervall oder -zeitpunkt
- E: Belichtungsintervall
- R: Ausleseintervall
- T: Transferzeitpunkt
- W: Warteintervall
- t0, t1, t2, t3: Zeitpunkt

## Patentansprüche

1. Digitale Laufbildkamera, wenigstens mit
- einer optoelektronischen Sensoreinrichtung (31) zum Aufnehmen von Laufbildern, wobei die Sensoreinrichtung in einer flächigen Anordnung mehrere Sensorelemente (53, 55, 57, 61) zur Erzeugung eines jeweiligen Empfangssignals in Abhängigkeit von einer Lichtbeaufschlagung aufweist,
- einer Digitalisierungseinrichtung (35) zur Digitalisierung der Empfangssignale der Sensorelemente,
- einem optischen Sucher (27, 29) zur optischen Beobachtung der aufzunehmenden Laufbilder, und
- einer drehbeweglichen Spiegelblende (15), die der Sensoreinrichtung (31) vorgeschaltet ist,
**dadurch gekennzeichnet,**
**dass** mittels der drehbeweglichen Spiegelblende (15) ein Empfangsstrahlengang (13) wenigstens in einen Aufnahmestrahlengang (19) für die Sensoreinrichtung und einen Sucherstrahlengang (21) für den optischen Sucher aufteilbar ist,
**dass** die Laufbildkamera eine Steuereinrichtung (45, 47) zur Steuerung des Auslesens der Empfangssignale der Sensorelemente aufweist, wobei mittels der Steuereinrichtung (45, 47) zum einen die Sensoreinrichtung (31) zum Aufnehmen der Laufbilder mit einer vorgebbaren variablen Bildaufnahmefrequenz ansteuerbar ist und zum anderen die Rotationsfrequenz der drehbeweglichen Spiegelblende (15) steuerbar ist, um eine Belichtung oder Abdunklung der Sensoreinrichtung (31) mit einer verminderten oder erhöhten Rate zu bewirken.

2. Laufbildkamera nach Anspruch 1,
**dadurch gekennzeichnet,**
**dass** die drehbewegliche Spiegelblende (15) zugleich zur Einstellung der Belichtungszeit der Sensoreinrichtung (31) dient, wobei mittels der Steuereinrichtung (45, 47) die Größe oder der Winkelbereich einer Durchlassöffnung (23) der drehbeweglichen Spiegelblende variabel steuerbar ist, um die Belichtungszeit der Sensoreinrichtung (31) auf elektromechanische Weise zu steuern (15).

3. Laufbildkamera nach einem der vorhergehenden Ansprüche,
**dadurch gekennzeichnet,**
**dass** die Belichtungszeit der Sensoreinrichtung (31) durch Steuerung der Rotationsfrequenz der drehbeweglichen Spiegelblende (15) steuerbar ist.

4. Laufbildkamera nach einem der vorhergehenden Ansprüche,
**dadurch gekennzeichnet,**
**dass** die Sensorelemente mittels der Steuereinrichtung derart ansteuerbar sind, dass nach einem Auslesen aller Sensorelemente für die Dauer eines variablen Warteintervalls abgewartet wird, bis erneut mit einem Auslesen der Sensorelemente begonnen wird.

5. Laufbildkamera nach einem der vorhergehenden Ansprüche,
**dadurch gekennzeichnet,**
**dass** zur Variierung der Bildaufnahmefrequenz der Anfangszeitpunkt der Belichtung der Sensorelemente (53, 55, 57) und/oder der Endzeitpunkt der Belichtung der Sensorelemente mittels der Steuereinrichtung (45, 47) steuerbar ist.

6. Laufbildkamera nach einem der vorhergehenden Ansprüche,
**dadurch gekennzeichnet,**
**dass** die Sensorelemente (53, 55, 57) der Sensoreinrichtung (31) mittels der Steuereinrichtung (45, 47) zu einem sequentiellen Rücksetzen und einem nachfolgenden sequentiellen Auslesen ansteuerbar sind,
und/oder
**dass** zur Variierung der Bildaufnahmefrequenz der Takt eines sequentiellen Rücksetzens oder Auslesens der Empfangssignale der Sensorelemente (53, 55, 57) steuerbar ist.

7. Laufbildkamera nach einem der vorhergehenden Ansprüche,
**dadurch gekennzeichnet,**
**dass** die Sensorelemente der Sensoreinrichtung (31) mittels der Steuereinrichtung (45, 47) zu einem parallelen oder einem gruppenweise parallelen Rücksetzen oder Auslesen ansteuerbar sind.

8. Laufbildkamera nach einem der vorhergehenden Ansprüche,
**dadurch gekennzeichnet,**
**dass** die Bildaufnahmefrequenz stufenlos oder in Inkrementen eines Sensorelement-Auslesetakts variierbar ist.

9. Laufbildkamera nach einem der vorhergehenden Ansprüche,
**dadurch gekennzeichnet,**
**dass** jedem Sensorelement (53, 55, 57, 61) eine eigene Verstärkungseinrichtung (33) und/oder eine eigene Digitalisierungseinrichtung (35) zugeordnet ist, die vorzugsweise jeweils in die Sensoreinrichtung (31) integriert ist,
und/oder
**dass** die Sensoreinrichtung (31) einen CMOS-Sensor aufweist.

10. Laufbildkamera nach einem der vorhergehenden Ansprüche,
**dadurch gekennzeichnet,**
**dass** der optische Sucher (27, 29) zur Erzeugung eines virtuellen oder eines realen Bilds ausgebildet ist.

11. Laufbildkamera nach einem der vorhergehenden Ansprüche,
**dadurch gekennzeichnet,**
**dass** zur zusätzlichen Kontrollaufnahme der Laufbilder ein Kontroll-Fotosensor dem optischen Sucher nachgeschaltet ist,
und/ oder
**dass** entlang des Sucherstrahlengangs eine Strahlenteilereinrichtung vorgesehen ist, mittels derer der Sucherstrahlengang wenigstens in einen Kontrollaufnahmestrahlengang für einen Kontroll-Fotosensor und in einen Beobachtungsstrahlengang für den optischen Sucher aufteilbar ist.

12. Laufbildkamera nach einem der vorhergehenden Ansprüche,
**dadurch gekennzeichnet,**
**dass** die Belichtungszeit der Sensoreinrichtung (31) durch die Steuereinrichtung (45, 47) elektronisch steuerbar ist,
und/oder
**dass** die Belichtungszeit der Sensorelemente (53, 55, 57) durch die Steuereinrichtung (45, 47) für jedes Sensorelement individuell, für einen Teil der Sensorelemente gemeinsam oder für alle Sensorelemente gemeinsam steuerbar ist.

13. Laufbildkamera nach einem der vorhergehenden Ansprüche,
**dadurch gekennzeichnet,**
**dass** die drehbewegliche Spiegelblende (15) der Sensoreinrichtung (31) im Empfangsstrahlengang (13) vorgeschaltet ist, durch die die Belichtungszeit der Sensoreinrichtung einstellbar ist,
wobei die Spiegelblende (15), eine Rotationsblende und/oder eine oder mehrere, insbesondere kreissektorförmige Durchlassöffnungen (23) aufweist.

14. Laufbildkamera nach Anspruch 13,
**dadurch gekennzeichnet,**
**dass** die Rotationsfrequenz der Spiegelblende (15) durch die Steuereinrichtung (45, 47) variabel steuerbar ist,
und/ oder
**dass** der Takt des Auslesens der Empfangssignale der Sensorelemente (53, 55, 57) und die Rotationsfrequenz der Spiegelblende (15) mittels der Steuereinrichtung (45, 47) zueinander synchronisierbar sind,
und/oder
**dass** die Spiegelblende (15) mehrere Durchlassöffnungen (23) aufweist und die Bildaufnahmefrequenz ein der Anzahl der Durchlassöffnungen entsprechendes Vielfaches der Rotationsfrequenz der Spiegelblende ist,
und/oder
**dass** die Größe einer Durchlassöffnung (23) mittels der Steuereinrichtung (45, 47) variabel steuerbar ist.

15. Laufbildkamera nach einem der vorhergehenden Ansprüche,
**dadurch gekennzeichnet,**
**dass** die Sensorelemente (53, 55, 57) während einer Unterbrechung der Lichtbeaufschlagung zur Erzeugung von Referenzempfangssignalen ansteuerbar sind, die mit Empfangssignalen verrechenbar sind, die während einer Lichtbeaufschlagung der Sensoreinrichtung erzeugt werden.

16. Laufbildkamera nach einem der vorhergehenden Ansprüche,
**dadurch gekennzeichnet,**
**dass** die Sensorelemente (53, 55, 57) zur aufeinander folgenden Erzeugung mehrerer Empfangssignale ansteuerbar sind, die unterschiedlichen Belichtungszeiten entsprechen und einem einzigen Laufbild zugeordnet sind.

17. Laufbildkamera nach einem der vorhergehenden Ansprüche,
**dadurch gekennzeichnet,**
**dass** die Sensorelemente (53, 55, 57) zu einem wahlfreien Auslesen ansteuerbar sind,
und/oder
**dass** die Sensoreinrichtung (31) einen einzigen optoelektronischen Sensor aufweist,
und/oder
**dass** die Sensorelemente (53, 55, 57, 61) der Sensoreinrichtung (31) jeweils mit einem Farbfilter versehen sind,
und/oder
**dass** die Sensorelemente (53, 55, 57, 61) der Sensoreinrichtung (31) farbauflösend ausgebildet sind,
und/oder
**dass** eine Kühleinrichtung zur aktiven Kühlung der Sensoreinrichtung (31) vorgesehen ist, wobei die Kühleinrichtung vorzugsweise ein Peltier-Element oder einen Lüfter aufweist.

18. Laufbildkamera nach einem der vorhergehenden Ansprüche,
**dadurch gekennzeichnet,**
**dass** die Digitalisierungseinrichtung (35) mit wenigstens einer Datenschnittstelle zur Weiterleitung der digitalisierten Empfangssignale an eine digitale Speichereinrichtung (39) verbunden ist.

19. Laufbildkamera nach einem der vorhergehenden Ansprüche,
**dadurch gekennzeichnet,**
**dass** wenigstens eine digitale Speichereinrichtung (39) zum Speichern der digitalisierten Empfangssignale vorgesehen ist,
wobei die Speichereinrichtung vorzugsweise austauschbar an die Laufbildkamera ankoppelbar ist,
und/oder
**dass** die Speichereinrichtung (39) mittels der Steuereinrichtung (45, 47) vorzugsweise zum zusätzlichen Speichern wenigstens eines Aufnahmeparameters steuerbar ist,
und/oder
**dass** vorzugsweise eine Uhr zur Bereitstellung einer Uhrzeit vorgesehen ist, wobei mittels der Steuereinrichtung (45, 47) das Speichern einer aktuellen Uhrzeit gemeinsam mit Laufbilddaten oder einem Aufnahmeparameter steuerbar ist.

20. Laufbildkamera nach Anspruch 19,
**dadurch gekennzeichnet,**
**dass** die Speichereinrichtung (39) eine Identifizierungseinrichtung aufweist, durch die ein Identifizierungscode an die Steuereinrichtung (45, 47) übermittelbar ist,
und/oder
**dass** die Laufbildkamera und die Speichereinrichtung (39) für eine drahtlose Übertragung von abzuspeichernden Daten ausgebildet sind, wobei vorzugsweise die Laufbildkamera einen Funksender und die Speichereinrichtung (39) einen Funkempfänger aufweist,
und/oder
**dass** zur Aufnahme von abzuspeichernden Daten und Weitergabe der Daten an die Speichereinrichtung (39) eine Zwischenspeichereinrichtung vorgesehen ist.

21. Laufbildkamera nach einem der Ansprüche 19 und 20,
**dadurch gekennzeichnet,**
**dass** die Speichereinrichtung (39) wenigstens eine Ausgangsschnittstelle zur Ausgabe gespeicherter Daten aufweist,
und/oder
**dass** die Speichereinrichtung (39) zur Ausgabe gespeicherter Daten mit einer Rate steuerbar ist, die von der Rate des Einlesens abzuspeichernder Daten verschieden ist,
und/oder
**dass** die Speichereinrichtung (39) wenigstens einen magnetischen Speicher, einen magnetooptischen Speicher, einen Halbleiterspeicher und/oder einen optischen Speicher aufweist.

22. Laufbildkamera nach einem der vorhergehenden Ansprüche,
**gekennzeichnet**
**durch** einen modularen Aufbau, wobei jeweils
- die Sensoreinrichtung (31) gemeinsam mit der Steuereinrichtung (45, 47),
- eine Aufnahmeoptik (11),
- die Strahlenumlenkeinrichtung (15) gemeinsam mit einer mattierten Scheibe (27),
- eine Sucheroptik (29), und/oder
- eine Speichereinrichtung (39)
eine eigene Moduleinheit bildet.

## Claims

1. A digital motion picture camera, at least comprising
- an optoelectronic sensor device (31) for the recording of motion pictures, with the sensor device having, in an areal arrangement, a plurality of sensor elements (53, 55, 57, 61) for the generation of a respective received signal in dependence on a light exposure;
- a digitizing device (35) for the digitizing of the received signals of the sensor elements;
- an optical viewfinder (27, 29) for the visual observation of the motion pictures to be recorded; and
- a rotationally movable mirror diaphragm (15) which is positioned in front of the sensor device (31),
**characterized in that**
a received beam path (13) can be divided by means of the rotationally movable mirror diaphragm (15) into at least one recording beam path (19) for the sensor device and one viewfinder beam path (21) for the optical viewfinder;
the motion picture camera has a control device (45, 47) for the control of the read-out of the received signals of the sensor elements, with the sensor device (31) being controllable by means of the control device (45, 47) for the recording of the motion pictures at a pre-settable variable picture recording frequency, on the one hand, and the rotational frequency of the rotationally movable mirror diaphragm (15) being controllable, on the other hand, to effect an exposure or masking of the sensor device (31) at a reduced or increased rate.

2. A motion picture camera in accordance with claim 1, **characterized in that** the rotationally movable mirror diaphragm (15) simultaneously serves for the setting of the exposure time of the sensor device (31), with the size or the angular range of a transmission aperture (23) of the rotationally movable diaphragm device being variably controllable by means of the control device (45, 47) to control the exposure time of the sensor device (31) in an electromechanical manner (15).

3. A motion picture camera in accordance with any one of the preceding claims, **characterized in that** the exposure time of the sensor device (31) is controllable by control of the rotational frequency of the rotationally movable mirror diaphragm (15).

4. A motion picture camera in accordance with any one of the preceding claims, **characterized in that** the sensor elements can be controlled by means of the control device such that, after a read-out of all sensor elements, it is waited for the length of a variable waiting interval until a read-out of the sensor elements is begun again

5. A motion picture camera in accordance with any one of the preceding claims, **characterized in that** the starting point in time of the exposure of the sensor elements (53, 55, 57) and/or the end point in time of the exposure of the sensor elements is controllable by means of the control device (45, 47) for the variation of the picture recording frequency.

6. A motion picture camera in accordance with any one of the preceding claims, **characterized in that** the sensor elements (53, 55, 57) of the sensor device (31) can be controlled by means of the control device (45, 47) for a sequential resetting and a subsequent sequential
read-out;
and/ or
**in that** the cycle of a sequential resetting or read-out of the received signals of the sensor elements (53, 55, 57) is controllable for the variation of the picture recording frequency.

7. A motion picture camera in accordance with any one of the preceding claims, **characterized in that** the sensor elements of the sensor device (31) are controllable by means of the control device (45, 47) for a parallel, or a group-wise parallel, resetting or read-out.

8. A motion picture camera in accordance with any one of the preceding claims, **characterized in that** the picture recording frequency is variable continuously or in increments of a sensor element read-out cycle.

9. A motion picture camera in accordance with any one of the preceding claims, **characterized in that** each sensor element (53, 55, 57, 61) has its own amplifier device (33) and/or its own digitizing device (35) associated with it which is preferably integrated in each case into the sensor device (31);
and/or
**in that** the sensor device (31) has a CMOS sensor.

10. A motion picture camera in accordance with any one of the preceding claims, **characterized in that** the optical viewfinder (27, 29) is made for the generation of a virtual or of a real image.

11. A motion picture camera in accordance with any one of the preceding claims, **characterized in that** a control photo sensor is disposed downstream of the optical viewfinder for the additional control recording of the motion pictures;
and/or
**in that** a beam splitter device is provided along the viewfinder beam path by means of which the viewfinder beam path can be split at least into one control recording beam path for a control photo sensor and into one observation beam path for the optical viewfinder.

12. A motion picture camera in accordance with any one of the preceding claims, **characterized in that** the exposure time of the sensor device (31) is electronically controllable by the control device (45, 47);
and/or
**in that** the exposure time of the sensor elements (53, 55, 57) is controllable by the control device (45, 47) for each sensor element individually, for some of the sensor elements together or for all sensor elements together.

13. A motion picture camera in accordance with any one of the preceding claims, **characterized in that** the rotationally movable mirror diaphragm (15), by which the exposure time of the sensor device can be set, is disposed upstream of the sensor device (31) in the reception beam path (13), wherein the mirror diaphragm (15) has a rotational diaphragm and/or one or more transmission openings (23), in particular transmission openings in the shape of sectors of a circle.

14. A motion picture camera in accordance with claim 13, **characterized in that** the rotational frequency of the mirror diaphragm (15) is variably controllable by the control device (45, 47);
and/or
**in that** the cycle of the read-out of the received signals of the sensor elements (53, 55, 57) and the rotational frequency of the mirror diaphragm (15) can be synchronized with one another by means of the control device (45, 47);
and/or
**in that** the mirror diaphragm (15) has a plurality of transmission openings (23) and the picture recording frequency is a multiple of the rotational frequency of the mirror diaphragm corresponding to the number of the transmission openings;
and/or
**in that** the size of a transmission opening (23) is variably controllable by means of the control device (45, 47).

15. A motion picture camera in accordance with any one of the preceding claims, **characterized in that** the sensor elements (53, 55, 57) are controllable during an interruption of the light exposure for the generation of reference received signals which can be offset against received signals generated during a light exposure of the sensor device.

16. A motion picture camera in accordance with any one of the preceding claims, **characterized in that** the sensor elements (53, 55, 57) are controllable for the sequential generation of a plurality of received signals which correspond to different exposure times and are associated with a single motion picture.

17. A motion picture camera in accordance with any one of the preceding claims, **characterized in that** the sensor elements (53, 55, 57) are controllable for a freely selectable read-out;
and/or
**in that** the sensor device (31) has a single optoelectronic sensor;
and/or
**in that** the sensor elements (53, 55, 57, 61) of the sensor device (31) are each provided with a color filter;
and/or
**in that** the sensor elements (53, 55, 57, 61) of the sensor device (31) are color resolving;
and/or
**in that** a cooling device is provided for the active cooling of the sensor device (31), with the cooling device preferably having a Peltier element or a fan.

18. A motion picture camera in accordance with any one of the preceding claims, **characterized in that** the digitizing device (35) is connected to at least one data interface for the transmission of the digitized received signals to a digital memory device (39).

19. A motion picture camera in accordance with any one of the preceding claims, **characterized in that** at least one digital memory device (39) is provided for the storage of the digitized received signals, with the memory device preferably being able to be coupled to the motion picture camera in an exchangeable manner;
and/ or
**in that** the memory device (39) is preferably controllable by means of the control device (45, 47) for the additional storage of at least one recording parameter;
and/ or
**in that** a clock is preferably provided for the making available of a time, with the storage of an actual time together with motion picture data or with a recording parameter being controllable by means of the control device (45, 47).

20. A motion picture camera in accordance with claim 19, **characterized in that** the memory device (39) has an identification device by which an identification code can be transmitted to the control device (45, 47);
and/ or
**in that** the motion picture camera and the memory device (39) are designed for a wireless transmission of data to be stored, with the motion picture camera preferably having a wireless transmitter and the memory device (39) having a wireless receiver;
and/or
**in that** an intermediate memory device is provided for the recording of data to be stored and for the transmission of the data to the memory device (39).

21. A motion picture camera in accordance with any one of the claims 19 and 20, **characterized in that** the memory device (39) has at least one output interface for the outputting of stored data;
and/or
**in that** the memory device (39) for the output of stored data is controllable at a rate which is different to the rate of the reading in of data to be stored;
and/or
**in that** the memory device (39) has at least one magnetic memory, a magneto-optical memory, a semiconductor memory and/or an optical memory.

22. A motion picture camera in accordance with any one of the preceding claims, **characterized by** a modular design, with
- the sensor device (31) together with the control device (45, 47),
- a recording optical system (11),
- the beam deflection device (15) together with a focusing screen (27),
- a viewfinder optical system (29), and/or
- a memory device (39)
each forming its own modular unit.

## Revendications

1. Caméra cinématographique numérique, avec au moins
- un dispositif capteur optoélectronique (31) pour l'enregistrement d'images filmées, le dispositif capteur comprenant dans une disposition à plat plusieurs éléments capteurs (53, 55, 57, 61) pour la production d'un signal de réception respectif en fonction d'une admission de lumière,
- un dispositif de numérisation (35) pour la numérisation des signaux de réception des éléments capteurs,
- un viseur optique (27, 29) pour l'observation optique des images filmées à enregistrer, et
- un diaphragme à miroir rotatif (15) qui est placé en amont du dispositif capteur (31),
**caractérisée en ce que**,
une trajectoire de faisceau de réception (13) peut être répartie au moyen du diaphragme à miroir rotatif (15) au moins en une trajectoire de faisceau d'enregistrement (19) pour le dispositif capteur et en une trajectoire de faisceau de viseur (21) pour le viseur optique,
la caméra cinématographique comprend un dispositif de commande (45, 47) pour la commande de l'extraction des signaux de réception des éléments capteurs, moyennant quoi, au moyen du dispositif de commande (45, 47), d'une part le dispositif capteur (31) peut être activé pour l'enregistrement des images filmées avec une fréquence d'enregistrement des images variable préalablement définissable, et d'autre part la fréquence de rotation du diaphragme à miroir rotatif (15) peut être commandée, afin de provoquer une exposition ou un assombrissement du dispositif capteur (31) à un taux réduit ou accru.

2. Caméra cinématographique selon la revendication 1,
**caractérisée en ce que**,
le diaphragme à miroir rotatif (15) sert simultanément au réglage du temps d'exposition du dispositif capteur (31), moyennant quoi, au moyen du dispositif de commande (45, 47), la grandeur ou la zone angulaire d'un orifice de transmission (23) du diaphragme à miroir rotatif peut être commandée de façon variable, pour commander (15) le temps d'exposition du dispositif capteur (31) de manière électromécanique.

3. Caméra cinématographique selon l'une des revendications précédentes,
**caractérisée en ce que**,
le temps d'exposition du dispositif capteur (31) peut être commandé par la commande de la fréquence de rotation des diaphragmes à miroirs rotatifs (15).

4. Caméra cinématographique selon l'une des revendications précédentes,
**caractérisée en ce que**,
les éléments capteurs peuvent être activés au moyen du dispositif de commande, de telle sorte que, après une extraction de tous les éléments capteurs, une attente a lieu pendant la durée d'un intervalle d'attente variable jusqu'à ce qu'une nouvelle extraction des éléments capteurs commence.

5. Caméra cinématographique selon l'une des revendications précédentes,
**caractérisée en ce que**,
aux fins de variation de la fréquence d'enregistrement des images, le moment de départ de l'exposition des éléments capteurs (53, 55, 57) et/ou le moment final de l'exposition des éléments capteurs peuvent être commandés au moyen du dispositif de commande (45, 47).

6. Caméra cinématographique selon l'une des revendications précédentes,
**caractérisée en ce que**,
les éléments capteurs (53, 55, 57) du dispositif capteur (31) peuvent être activés au moyen du dispositif de commande (45, 47) en vue d'une réinitialisation séquentielle et d'une extraction séquentielle consécutive,
et/ou
aux fins de variation de la fréquence d'enregistrement des images, la fréquence d'une réinitialisation séquentielle ou d'une extraction des signaux de réception des éléments capteurs (53, 55, 57) peut être commandée.

7. Caméra cinématographique selon l'une des revendications précédentes,
**caractérisée en ce que**,
les éléments capteurs du dispositif capteur (31) peuvent être activés au moyen du dispositif de commande (45, 47) en vue d'une réinitialisation parallèle ou parallèle groupée ou d'une extraction.

8. Caméra cinématographique selon l'une des revendications précédentes,
**caractérisée en ce que**,
la fréquence d'enregistrement des images est modifiable graduellement ou en incréments d'une fréquence d'extraction de l'élément capteur.

9. Caméra cinématographique selon l'une des revendications précédentes,
**caractérisée en ce que**,
à chaque élément capteur (53, 55, 57, 61) est attribué un dispositif d'amplification (33) propre et/ou un dispositif de numérisation propre (35) qui est intégré de préférence respectivement dans le dispositif capteur (31),
et/ou
le dispositif capteur (31) comprend un capteur CMOS.

10. Caméra cinématographique selon l'une des revendications précédentes,
**caractérisée en ce que**,
le viseur optique (27, 29) est configuré pour la production d'une image virtuelle ou d'une image réelle.

11. Caméra cinématographique selon l'une des revendications précédentes,
**caractérisée en ce que**,
pour l'enregistrement de contrôle supplémentaire des images filmées, un capteur photo de contrôle est monté en aval du viseur optique,
et/ou
un dispositif de division de faisceau est prévu le long de la trajectoire de faisceau du viseur, au moyen duquel la trajectoire de faisceau du viseur peut être répartie en au moins une trajectoire de faisceau d'enregistrement de contrôle pour un capteur photo de contrôle et en une trajectoire de faisceau d'observation pour le viseur optique.

12. Caméra cinématographique selon l'une des revendications précédentes,
**caractérisée en ce que**,
le temps d'exposition du dispositif capteur (31) peut être commandé électroniquement par le dispositif de commande (45, 47),
et/ou
le temps d'exposition des éléments capteurs (53, 55, 57) peut être commandé par le dispositif de commande (45, 47) pour chaque élément capteur individuellement, pour une partie des éléments capteurs en commun, ou pour tous les éléments capteurs en commun.

13. Caméra cinématographique selon l'une des revendications précédentes,
**caractérisée en ce que**,
le diaphragme à miroir rotatif (15) est placé en amont du dispositif capteur (31) dans la trajectoire de faisceau de réception (13), par lequel est réglable le temps d'exposition du dispositif capteur, moyennant quoi le diaphragme à miroir (15) comprend un diaphragme de rotation et/ou un ou plusieurs orifices de transmission (23) en particulier en forme de secteur circulaire.

14. Caméra cinématographique selon la revendication 13,
**caractérisée en ce que**,
la fréquence de rotation du diaphragme à miroir (15) peut être commandée de façon variable par le dispositif de commande (45, 47),
et/ou
la fréquence d'extraction des signaux de réception des éléments capteurs (53, 55, 57) et la fréquence de rotation du diaphragme à miroir (15) peuvent être synchronisés l'un par rapport à l'autre au moyen du dispositif de commande (45, 47),
et/ou
le diaphragme à miroir (15) comprend plusieurs orifices de transmission (23), et la fréquence d'enregistrement des images est un multiple de la fréquence de rotation correspondant au nombre d'orifices de transmission du diaphragme à miroir,
et/ou
la dimension d'un orifice de transmission (23) peut être commandée de façon variable au moyen du dispositif de commande (45, 47).

15. Caméra cinématographique selon l'une des revendications précédentes,
**caractérisée en ce que**,
les éléments capteurs (53, 55, 57) peuvent être activés pendant une interruption de l'admission de lumière pour la production de signaux de réception de référence qui peuvent être calculés avec les signaux de réception qui sont produits pendant une admission de lumière du dispositif capteur.

16. Caméra cinématographique selon l'une des revendications précédentes,
**caractérisée en ce que**,
les éléments capteurs (53, 55, 57) peuvent être activés en vue de la production consécutive de plusieurs signaux de réception qui correspondent à différents temps d'exposition et sont associés à une unique image filmée.

17. Caméra cinématographique selon l'une des revendications précédentes,
**caractérisée en ce que**,
les éléments capteurs (53, 55, 57) peuvent être activés en vue d'une extraction aléatoire,
et/ou
le dispositif capteur (31) comprend un unique capteur optoélectronique,
et/ou
les éléments capteurs (53, 55, 57, 61) du dispositif capteur (31) sont dotés respectivement d'un filtre couleur,
et/ou
les éléments capteurs (53, 55, 57, 61) du dispositif capteur (31) sont configurés avec une résolution de couleur,
et/ou
un dispositif de réfrigération est prévu pour la réfrigération active du dispositif capteur (31), le dispositif de réfrigération comprenant de préférence un élément Peltier ou un ventilateur.

18. Caméra cinématographique selon l'une des revendications précédentes,
**caractérisée en ce que**,
le dispositif de numérisation (35) est relié à au moins une interface de données pour la transmission des signaux de réception numérisés à un dispositif de stockage numérique (39).

19. Caméra cinématographique selon l'une des revendications précédentes,
**caractérisée en ce que**,
au moins un dispositif de stockage numérique (39) est prévu pour le stockage des signaux de réception numérisés, le dispositif de stockage pouvant être couplé à la caméra cinématographique de préférence de manière interchangeable,
et/ou
le dispositif de stockage (39) peut être commandé au moyen du dispositif de commande (45, 47) de préférence en vue du stockage supplémentaire d'au moins un paramètre d'enregistrement,
et/ou
de préférence une horloge est prévue pour la fourniture d'une heure, la mémorisation d'une heure actuelle conjointement avec des données de l'image filmée ou un paramètre d'enregistrement pouvant être commandée au moyen du dispositif de commande (45, 47).

20. Caméra cinématographique selon la revendication 19,
**caractérisée en ce que**,
le dispositif de stockage (39) comprend un dispositif d'identification par lequel un code d'identification peut être communiqué au dispositif de commande (45, 47),
et/ou
la caméra cinématographique et le dispositif de stockage (39) sont configurés pour une transmission sans fil de données devant être stockées, la caméra cinématographique comprenant de préférence un émetteur radio et le dispositif de stockage (39) comprenant un récepteur radio,
et/ou
un dispositif de stockage intermédiaire est prévu pour l'enregistrement de données devant être stockées et la transmission des données au dispositif de stockage (39).

21. Caméra cinématographique selon l'une des revendications 19 et 20,
**caractérisée en ce que**,
le dispositif de stockage (39) comprend au moins une interface de sortie pour la sortie des données stockées,
et/ou
le dispositif de stockage (39) pour la sortie des données stockées peut être commandé avec un taux qui est différent du taux de lecture des données devant être stockées,
et/ou
le dispositif de stockage (39) comprend au moins une mémoire magnétique, une mémoire magnéto-optique, une mémoire semi-conductrice et/ou une mémoire optique.

22. Caméra cinématographique selon l'une des revendications précédentes,
**caractérisée**
**par** une construction modulaire, moyennant quoi respectivement
- le dispositif capteur (31) conjointement avec le dispositif de commande (45, 47),
- une optique d'enregistrement (11),
- un dispositif de coudage des faisceaux (15) conjointement avec un disque dépoli (27),
- une optique de viseur (29), et/ou
- un dispositif de stockage (39)
forment une unité modulaire propre.
